(19) Europäisches Patentamt
European Patent Office
Office européen des brevets

(11) **EP 0 588 006 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**17.12.2008 Patentblatt 2008/51**

(45) Hinweis auf die Patenterteilung:
**10.09.1997 Patentblatt 1997/37**

(21) Anmeldenummer: **93110982.1**

(22) Anmeldetag: **09.07.1993**

(51) Int Cl.:
*H02J 13/00* (2006.01)     *H04Q 9/14* (2006.01)

(54) **Rundsteuerverfahren und Rundsteuerempfänger zur Ausführung des Rundsteuerverfahrens**

Remote-control method and associated receiver

Procédé de télécommande et récepteur pour sa mise en place

(84) Benannte Vertragsstaaten:
**AT BE CH DE FR LI NL SE**

(30) Priorität: **14.09.1992 CH 288292**

(43) Veröffentlichungstag der Anmeldung:
**23.03.1994 Patentblatt 1994/12**

(73) Patentinhaber: **Landis+Gyr AG**
**6300 Zug (CH)**

(72) Erfinder:
• **Lorenzi, Marcel**
**CH-6312 Steinhausen (CH)**
• **Hess, Hugo**
**CH-6312 Steinhausen (CH)**
• **Walzer, Claude**
**CH-6312 Steinhausen (CH)**
• **Schweizer, Christian**
**CH-6312 Steinhausen (CH)**

• **Boesiger, Hanspeter**
**CH-6312 Steinhausen (CH)**

(74) Vertreter: **Rentsch & Partner et al**
**Fraumünsterstrasse 9**
**Postfach 2441**
**8022 Zürich (CH)**

(56) Entgegenhaltungen:
**EP-A- 0 153 856          WO-A-88/02583**
**WO-A-91/10276          DE-A- 2 915 519**
**GB-A- 2 111 735**

• **LANDIS UND GYR MITTEILUNGEN Bd. 22, Nr. 4 , 1975 , ZUG CH Seiten 16 - 20 GOLDBERG 'optimierung des rundsteuerbetriebes durch einsatz von prozessrechern'**
• **E-R. PAESSLER ET AL.: 'Innovationen im Rundsteuersystem Telenerg' ELEKTRIZITAETSWIRTSCHAFT Bd. JG.90, Nr. 6, 1991, NÜRNBERG, Seiten 239 - 245**

EP 0 588 006 B2

**Beschreibung**

Die Erfindung bezieht sich auf ein Rundsteuerverfahren gemäss dem Oberbegriff des Anspruchs 1 und auf einen Rundsteuerempfänger zur Ausführung des Rundsteuerverfahrens gemäss dem Oberbegriff des Anspruchs 16 (siehe Landis und Gyr Mitteilungen, Bd. 22, Nr. 4, 1975, ZUG CH, Seiten 16 - 20, Goldberg, Optimierung des Rundsteuerbetriebs durch Einsatz von Prozessrechnern).

Aus dem Buch Fernwirktechnik, Überwachen und Steuern von Prozessen, W. Weber, VDI-Verlag GmbH, 1975, Absatz 8.6, Rundsteuersysteme, Seiten 149 bis 155, ist eine Übersicht verschiedener Rundsteuer-Systeme, insbesonders solcher, welche nach dem Impulsintervall-Verfahren arbeiten, bekannt.

Aus der WO-A-88 02583 ist ein Energie-Management-System bekannt, in dem kodierte Energie-Management-Signale von einer Zentrale zu Verbrauchern übertragen werden, wo sie anschliessend nach ihrem Empfang über ein Energieversorgungsnetz zu Empfängern weitergeleitet werden, die einen Decodierer, jedoch keinerlei Intelligenz aufweisen und in denen auch keine Liste von zeitlich festgelegten Befehlen abgespeichert ist.

Aus der EP-A-0 153 856 ist ein Daten-Management-System bekannt, welches aus mehreren Computern besteht, die über eine Busverbindung miteinander verbunden sind und im Echtzeit-Betrieb zur Steuerung von Herstellungsprozessen Prozessparameter austauschen. Ein Hinweis auf zeitlich geordnete Befehlslisten in einem Zentral-Computer und zugeordneten lokalen Computern, wobei die Befehlsliste in einem lokalen Computer ein teilweises Abbild der Befehlsliste im Zentral-Computer darstellt, ist diesem Dokument nicht entnehmbar.

Rundsteuerverfahren sind Übertragungs-Verfahren, bei denen eine Rundsteuer-Sendezentrale Rundsteuer-Telegramme über ein beliebiges Übertragungsmedium, z. B. über ein elektrisches Energie-Versorgungsnetz, zu einer Vielzahl von Rundsteuerempfängern sendet. Jedes Rundsteuer-Telegramm besteht dabei aus einer Reihe tonfrequenter binärwertiger Impulse, wovon der erste, ein sogenannter Start-Impuls, in der Regel länger ist als die anderen Impulse des Rundsteuer-Telegramms, welche alle gleich lang sind und nachfolgend als Informations-Impulse bezeichnet werden, da sie die eigentlichen zu übertragenden Informationen beinhalten. Jeder Informations-Impuls enthält eine doppelte Information, nämlich einerseits seine Position im Rundsteuer-Telegramm und anderseits seinen Logikwert "1" oder "0", gekennzeichnet durch das Vorhandensein bzw. Nichtvorhandensein des Impulses im gesendeten Rundsteuer-Telegramm. Die Informations-Impulse sind innerhalb des Rundsteuer-Telegramms vorzugsweise fortlaufend durchnumeriert, wobei die so erhaltene laufende Nummer als EK-Nummer (Einzelkommando-Nummer) bezeichnet wird. Ausserdem sind die Informations-Impulse oft in einem aus zwei zeitlich aufeinanderfolgenden Informations-Impulsen bestehenden Impulspaar, dem sogenannten Doppelkommando, zusammengefasst. Alle Doppelkommandos sind z. B. innerhalb des Rundsteuer-Telegramms fortlaufend durchnumeriert, wobei die so erhaltene laufende Nummer, z. B. 1 bis 25 (wenn keine Adresse vorhanden ist) bzw. 6 bis 25 (wenn die zehn ersten Informations-Impulse eine Adresse darstellen) beim Vorhandensein von 50 Informations-Impulsen, als DK-Nummer (Doppelkommando-Nummer) bezeichnet wird. Die EK- bzw. DK-Nummer eines Informations-Impulses definiert somit die Lage des betreffenden Informations-Impulses im Rundsteuer-Telegramm. Die Lagen der einzelnen Impulse im Rundsteuer-Telegramm sind dabei alle durch ein festes Impulsraster vorgegeben.

Der Start-Impuls dient dazu, im Betrieb die Rundsteuerempfänger mit der Rundsteuer-Sendezentrale zu synchronisieren und den Referenz-Nullwert der Zeit zu markieren. Die Rundsteuerungen arbeiten oft nach dem Impulsintervall-Prinzip, bei dem jeder Informations-Impuls gefolgt ist von einer Impulslücke.

Der Erfindung liegt die Aufgabe zugrunde,

- bekannte nach dem Impulsintervall-Verfahren arbeitende Rundsteuerverfahren und Rundsteuerempfänger so funktional zu verbessern, dass die letzteren,

- unter Beibehaltung einer einfachen und übersichtlichen Betriebsführung bestehender Rundsteuer-Anlagen,

- selbständig zeitabhängige Befehle ausführen können.

Die Rundsteuerempfänger können ausserdem unter Beibehaltung des Adressierungs-Systems bestehender Rundsteuer-Anlagen ohne Kompatibilitäts-Schwierigkeiten in die bestehenden Rundsteuer-Anlagen eingebaut werden, wo sie universell änderbar die selbständigen Befehle ausführen können.

Die genannte Aufgabe wird erfindungsgemäss durch die im Kennzeichen des Anspruchs 1 bzw. des Anspruchs 16 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:

Fig. 1      ein Blockschaltbild einer bisherigen, bereits installierten Rundsteuer-Anlage, welche mittels Neu-Rundsteuerempfänger erweitert ist,

Fig. 2      ein Rundsteuer-Telegramm für Direktschalt-Alt-Rundsteuerempfänger,

Fig. 3      ein Rundsteuer-Telegramm für Alt-Rundsteuerempfänger, die Lasten oder Last-Gruppen ansteuern, die mit Last-Adressen versehen sind,

Fig. 4    eine Sendezentrale-Zeitprogramm-Liste und zwei dazugehörige Empfänger-Zeitprogramm-Listen,

Fig. 5    eine erfindungsgemässe Telegramm-Sequenz,

Fig. 6    eine durch ein Rundsteuer-Telegramm höherer Priorität zwischen zwei Rundsteuer-Telegrammen unterbrochene erfindungsgemässe Telegramm-Sequenz mit nur einer nachfolgenden Übertragung des fehlenden Teils der Telegramm-Sequenz,

Fig. 7    eine durch ein Rundsteuer-Telegramm höherer Priorität zwischen zwei Rundsteuer-Telegrammen unterbrochene erfindungsgemässe Telegramm-Sequenz mit einer nachfolgend vollständig wiederholten Telegramm-Sequenz,

Fig. 8    eine durch ein Rundsteuer-Telegramm höherer Priorität innerhalb eines Rundsteuer-Telegramms unterbrochene erfindungsgemässe Telegramm-Sequenz,

Fig. 9    eine detaillierte erfindungsgemässe Telegramm-Sequenz ohne Impulsschritt-Positionen von Direktschalt-Befehlen und

Fig. 10    eine detaillierte erfindungsgemässe Telegramm-Sequenz mit Impulsschritt-Positionen von Direktschalt-Befehlen.

Gleiche Bezugszahlen bezeichnen in allen Figuren der Zeichnung gleiche Teile.

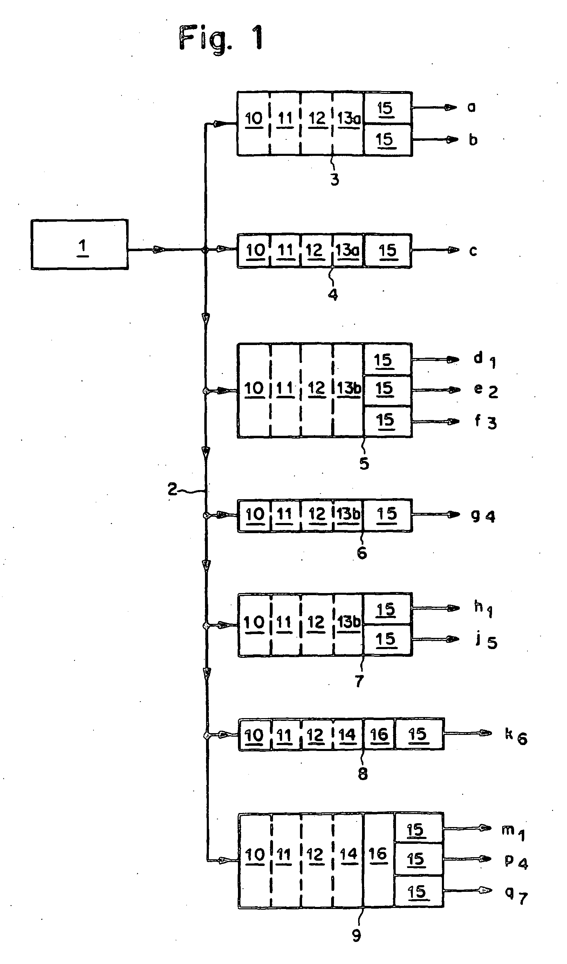

Erfindungsgemässe Rundsteuerempfänger, die das erfindungsgemässe Rundsteuerverfahren ausführen, werden unter anderem in bereits bestehende Rundsteuer-Anlagen eingebaut. In der Fig. 1 ist ein Blockschaltbild einer mit erfindungsgemässen Rundsteuerempfängern erweiterten, bisherigen und bereits installierten Rundsteuer-Anlage dargestellt, in der eine Rundsteuer-Sendezentrale 1 über ein Übertragungsmedium 2 mit einer Vielzahl, z. B. mit sieben Rundsteuerempfängern 3 bis 9 verbunden ist, wovon die fünf Rundsteuerempfänger 3 bis 7 Alt-Rundsteuerempfänger und die Rundsteuerempfänger 8 bis 9 nachträglich in die Rundsteuer-Anlage eingebaute Neu-Rundsteuerempfänger sind. Nachfolgend gilt immer die Annahme, dass alle Neu-Rundsteuerempfänger, also auch die Neu-Rundsteuerempfänger 8 und 9, erfindungsgemässe Rundsteuerempfänger sind.

Beim Einbau von Neu-Rundsteuerempfängern 8 bis 9 in bestehenden Rundsteuer-Anlagen gilt ganz allgemein die Regel, dass die dort bereits installierten Alt-Rundsteuerempfänger 3 bis 7, die in der Regel erst im Laufe der Zeit nach vielen Jahren durch Neu-Rundsteuerempfänger 8 bis 9 ersetzt werden, in der Zwischenzeit nicht durch die Verwendung eines neuen Rundsteuerverfahrens gestört werden dürfen.

Alle Rundsteuerempfänger 3 bis 9 enthalten je ein Eingangs-Bandpassfilter 10 zur Eliminierung von Störsignalen, wie z. B. der Netzspannung und deren Harmonische, einen Demodulator 11 zur Umwandlung von empfangenen modulierten tonfrequenten Rundsteuer-Impulsen in z. B. binäre Gleichspannungs-Impulse sowie eine Impulsdauer- und Impulslage-Kontrollanordnung 12 zur Ermittlung der Dauer und der Lage von empfangenen Impulsen.

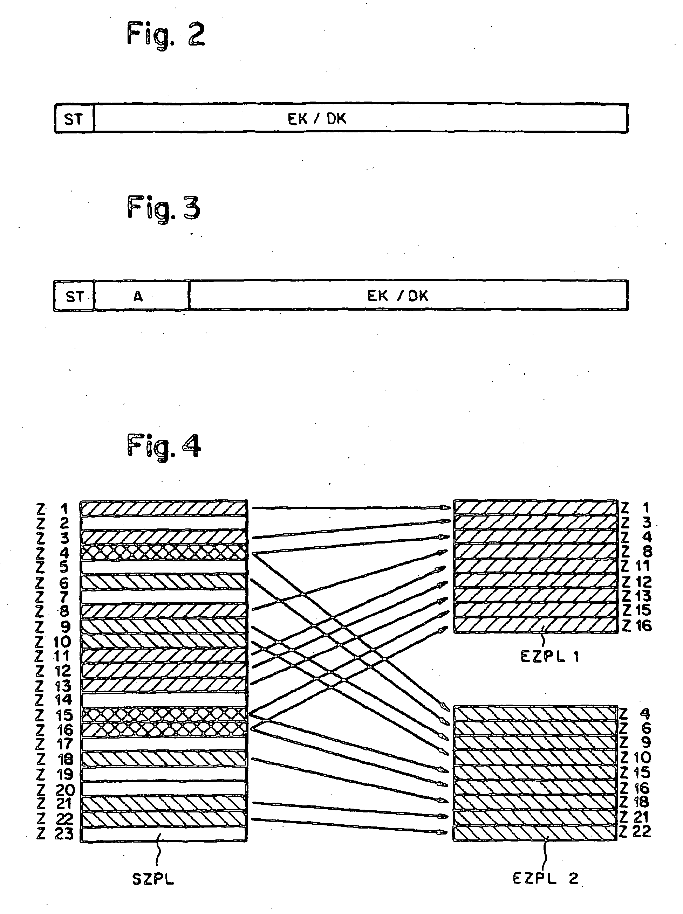

In den Anfangszeiten der Rundsteuerung wurden adressenlose Rundsteuer-Telegramme verwendet, zu denen adressenlose Lasten gehörten, welche von Direktschalt-Alt-Empfängern angesteuert wurden. Die letzteren enthalten einen einfachen Decodierer 13a und reagieren auf ganz bestimmte Informations-Impulse des Rundsteuer-Telegramms, deren Positionen im Rundsteuer-Telegramm nachfolgend als Impulsschritt-Positionen von Direktschalt-Befehlen bezeichnet werden. In der Fig. 2 ist ein zu Direktschalt-Alt-Rundsteuerempfängern gehörendes adressenloses Rundsteuer-Telegramm dargestellt, welches aus einem Start-Impuls ST und einer Vielzahl zeitlich nachfolgender Einzelkommandos EK bzw. Doppelkommandos DK besteht. Bei späterer Einführung von Adressen mussten M der meist am Anfang der Rundsteuer-Telegramme befindlichen Informationsimpuls-Plätze, die bis dahin mit Direktschalt-Befehlen belegt waren, für die neueingeführten Adressen freigemacht werden. Ein solcher Umstellungs-Prozess dauerte in der Regel viele Jahre, so dass noch heute viele bereits bestehende Rundsteuer-Anlagen Direktschalt-Alt-Rundsteuerempfänger enthalten. Dabei sind im Rundsteuer-Telegramm die Impulsschritt-Positionen der zugehörigen Direktschalt-Befehle in der Regel fest vorgegeben. Die Alt-Rundsteuerempfänger 3 und 4 sind z. B. solche Direktschalt-Alt-Rundsteuerempfänger, die noch in der bereits bestehenden Rundsteuer-Anlage vorhanden sind. Der Direktschalt-Alt-Rundsteuerempfänger 3 steuert mittels je eines Ausgangs-Relais 15 z. B. zwei adressenlose Lasten a und b an, während der Direktschalt-Alt-Rundsteuerempfänger 4 z. B. mittels eines Ausgangs-Relais 15 eine adressenlose Last c ansteuert.

Die Alt-Rundsteuerempfänger 5 bis 7 enthalten je einen Decodierer 13b und steuern mittels je eines Ausgangs-Relais 15 Lasten $d_1$, $e_2$, $f_3$, $g_4$, $h_1$ und $j_5$ oder Lastgruppen an, die alle je mit einer Last-Adresse versehen sind, welche z. B. als tiefgestellte Index-Zahl bei der Bezeichnung der betreffenden Last angegeben ist. Dabei steuert z. B. der Alt-Rundsteuerempfänger 5 die drei Lasten $d_1$, $e_2$ und $f_3$, der Alt-Rundsteuerempfänger 6 die einzige Last $g_4$ und der Alt-Rundsteuerempfänger 7 die beiden Lasten $h_1$ und $j_5$ an. Mehrere Lasten, z. B. die Lasten $d_1$ und $h_1$, können einer gleichen Last-Gruppe angehören und besitzen dann eine gleiche Last-Adresse, z. B. "1", die dann gleichzeitig die Adresse der betreffenden Lastgruppe ist. In der Fig. 3 ist ein zu den Alt-Rundsteuerempfängern 5 bis 7 gehörendes Rundsteuer-Telegramm dargestellt, welches aus einem Start-Impuls ST, einer zeitlich nachfolgenden Last-Adresse A und einer Vielzahl der Last-Adresse A zeitlich nachfolgender Einzelkommandos EK bzw. Doppelkommandos DK besteht. Die Last-Adresse A ist dabei eine bisherige, in der bestehenden Rundsteuer-Anlage bereits verwendete Last-Adresse.

Die Neu-Rundsteuerempfänger 8 bis 9 enthalten je einen Decodierer 14 und steuern mittels je eines Ausgangs-Relais 15 Lasten $k_6$, $m_1$, $p_4$ und $q_7$ oder Lastgruppen an, die alle je mit einer Last-Adresse versehen sind, welche z. B. wieder als tiefgestellte Index-Zahl bei der Bezeichnung der betreffenden Last angegeben ist. Dabei steuert z. B. der Neu-Rundsteuerempfänger 8 die einzige Last $k_6$ und der Neu-Rundsteuerempfänger 9 die drei Lasten $m_1$, $p_4$ end $q_7$ an. Mehrere Lasten können wieder einer gleichen Last-Gruppe angehören und besitzen dann wieder eine gleiche Last-Adresse, die dann gleichzeitig die Adresse der betreffenden Lastgruppe ist. Dies kann auch der Fall sein bei Lasten, z. B. die Lasten $g_4$ und $p_4$, welche beide eine Last-Adresse "4" aufweisen, die sowohl von Alt- als auch von Neu-Empfänger 6 bzw. 9 angesteuert werden. Die Neu-Rundsteuerempfänger 8 bis 9 enthalten je einen Befehls- und Parameter-Speicher 16. Die zu einem Neu-Rundsteuerempfänger 8 bzw. 9 gehörenden Lasten $k_6$ bzw. $m_1$, $p_4$ und $p_7$ können entweder unabhängig (z. B. bei einem Notabwurf einer Last) oder mit Hilfe einer im Neu-Rundsteuerempfänger 8 bzw. 9 enthaltenen Uhr von einem im Befehls- und Parameter-Speicher 16 abgelegten Befehl geschaltet werden, wenn z. B. die Uhrzeit mit einem als Parameterwert abgelegten Zeitwert übereinstimmt.

Die mittels Rundsteuerung zu übertragenden Informationen sind in der Regel Befehle, welche nach ihrem Empfang in den Runsteuerempfängern 3 bis 9 dort, in der Regel unverzögert, Handlungen, vorzugsweise Schalthandlungen, auslösen. Im letzteren Fall sind die Befehle Schaltbefehle, die zum Ein/Aus-Schalten bestimmter vorgegebener Lasten a bis $q_7$ bestimmt sind, welche über je ein Ausgangs-Relais 15 der Rundsteuerempfänger 3 bis 9 angesteuert werden. Im Rundsteuerverfahren sind somit von den Rundsteuerempfängern 3 bis 9 eine Menge von Handlungen bzw. von Schalthandlungen auszuführen, die in der Rundsteuer-Sendezentrale 1 vorzugsweise in einer Liste von zeitlich festgelegten Befehlen, welche vorzugsweise eine Sendezentrale-Zeitprogramm-Liste SZPL ist, formuliert, dargestellt und abgespeichert sind, wobei die Zeilen der Sendezentrale-Zeitprogramm-Liste SZPL mindestens einen Befehl enthalten. Die Sendezentrale-Zeitprogramm-Liste SZPL ist dabei eine Sammlung von Einträgen, bei der jeder Eintrag definiert, welche Rundsteuer-Befehle wann zur Ausführung gelangen sollen.

Eine dialogorientierte Bedienung der Rundsteuer-Sendezentrale 1 erfolgt vorzugsweise über ein in einem Personal-Computer untergebrachtes Programm, wobei ein Operator den Personal-Computer über ein Datensichtgerät und eine Tastatur mittels Menü- und Fenster-Technik bedient. Der Operator verwaltet die Sendezentrale-Zeitprogramm-Liste SZPL und arbeitet mit ihr, wenn er ein Rundsteuer-Programm umprogrammieren will.

Jede Zeile der Sendezentrale-Zeitprogramm-Liste SZPL besteht aus Feldern, die vorzugsweise je eine der folgenden zusammengehörigen Informationen enthalten:

- eine Zeilen-Laufnummer,
- eine Programm-Nummer,
- eine Tageszeit für die Ausführung des in der Zeile enthaltenen Eintrags,
- Rundsteuer-Wochentage, an denen der Eintrag zur Ausführung gelangen soll,
- mindestens ein Befehl, der zu der in den übrigen Feldern der Zeile spezifizierten Zeit zur Ausführung gelangen soll und in der Regel eine Last-Adresse und einer DK- bzw. EK-Nummer sowie mindestens eine Ein/Aus-Information enthält,
- einen zeitlichen Gültigkeitsbereich (von Tag1/Monat1 bis Tag2/Monat2) für die in den übrigen Feldern der Zeile gemachten Angaben und
- eine externe Nummer als Kennzeichen für einen externen Zustand, von dessen Vorhandensein die Gültigkeit der bisher zu einem Eintrag gemachten Angaben abhängig sind.

Eine in der Rundsteuer-Sendezentale 1 eingebaute Quarzuhr mit Kalender, die von aussen synchronisiert werden kann, dient als Zeitbasis für die Programmierung der zu bestimmten Zeiten auszuführenden Befehle. Die 7 natürlichen Wochentage sind redundant in einem vollständigen, Schaltjahr-Angaben aufweisenden Datum des Kalenders enthalten und sind von diesem mittels einer Rechnung ableitbar. Die Rundsteuer-Wochentage müssen dagegen definiert werden, da jeder der 7 natürlichen Wochentage sich - rundsteuertechnisch gesehen - atypisch verhalten kann. Zusätzlich zu den 7 Wochentagen können z. B. noch zwei Rundsteuer-Spezialtage Nr.1 und Nr.2 definiert werden, so dass dann total 9 Rundsteuer-Wochentage vorhanden sind. Ein zu den Rundsteuer-Wochentagen gehörendes Feld der Zeilen enthält in diesem Fall z. B. 9 Bits, deren Positionen in der Reihenfolge MDMDFSS12 (Montag, Dienstag, ..., Sonntag, Spezialtag Nr.1, Spezialtag Nr.2) je mit einem Logikwert "0" oder "1" belegt sind, je nachdem ob am betreffenden Rundsteuer-Wochentag kein bzw. ein Befehl ausgeführt werden soll.

Die Zeilen der Sendezentrale-Zeitprogramm-Liste SZPL werden in der Rundsteuer-Sendezentrale 1, z. B. vom Personal-Computer, zeitlich nacheinander gelesen und ihr Informations-Inhalt mit Zusatz-Informationen ergänzt in ein Rundsteuer-Telegramm umgeformt, welches anschliessend, über das Übertragungsmedium 2 zu den Rundsteuerempfängern 3 bis 9 gesendet wird.

Die Rundsteuer-Sendezentrale einer Alt-Rundsteuer-Anlage kann, softwaremässig leicht angepasst, auch für das erfindungsgemässe Rundsteuerverfahren verwendet werden. Insbesonders ist der Inhalt der Sendezentrale-Zeitprogramm-Liste SZPL der Alt-Rundsteuer-Anlage, abgesehen von einem Index, vollumfänglich und unverändert verwendbar. Die zum erfindungsgemässen Rundsteuerverfahren gehörende Sendezentrale-Zeitprogramm-Liste SZPL unterscheidet sich von derjenigen bisheriger Rundsteuer-Sendezentralen dadurch, dass in jeder Zeile der Sendezentrale-Zeitprogramm-Liste SZPL noch ein zusätzliches Feld vorhanden ist, in welches eine als Index bezeichnete Zeilennummer enthalten ist. Der Index wird von der Rundsteuer-Sendezentrale 1 vergeben, wenn dort die betreffende Zeile eröffnet wird, und bleibt dieser Zeile zugeordnet, bis die letztere wieder aus der Sendezentrale-Zeitprogramm-Liste SZPL entfernt wird. Der Index ist dabei der betreffenden Zeile eindeutig zugeordnet, d. h. es gibt keine zwei Zeilen mit gleichem Index. Die Sendezentrale-Zeitprogramm-Liste SZPL enthält z. B. 23 Zeilen Z1 bis Z23 (siehe Fig. 4). Jede der Zeilen Z1 bis Z23 der Sende-Zeitprogramm-Liste SZPL ist mit einem zugehörigen Index versehen, der jeweils ein Teil der betreffenden Zeile der Sende-Zeitprogramm-Liste SZPL ist.

Das Vorhandensein des Befehls- und Parameter-Speichers 16 in den Neu-Rundsteuerempfängern 8 und 9 gestattet

- einerseits eine Verlagerung bestimmter Funktionen, insbesonders bestimmter zeitabhängiger Befehle, aus der Rundsteuer-Sendezentrale 1 in die Neu-Rundsteuerempfänger 8 und 9 sowie
- andererseits eine universelle selbständige Durchführung in den Neu-Rundsteuerempfängern 8 und 9 mindestens eines Teils der in der Sendezentrale-Zeitprogramm-Liste SZPL formulierten und dargestellten Handlungen bzw. Schalthandlungen.

Dabei wird eine besonders einfache Betriebsführung erreicht, wenn die in der Sendezentrale-Zeitprogramm-Liste SZPL enthaltenen Informations-Einheiten so sind, dass zur Verlagerung der Funktionen in die Neu-Rundsteuerempfänger 8 und 9, nur ein Abbild der in der Sendezentrale-Zeitprogramm-Liste SZPL enthaltenen Informations-Einheiten in die Neu-Rundsteuerempfänger 8 und 9 kopiert werden muss. Die Originale der Informations-Einheiten bleiben dabei jeweils in der Rundsteuer-Sendezentrale 1. In den Neu-Rundsteuerempfängern 8 und 9 wird somit je ein Abbild desjenigen Teils der Liste von Informations-Einheiten, d. h. der Sendezentrale-Zeitprogramm-Liste SZPL, abgespeichert, der demjenigen Teil der Handlungen entspricht, welcher vom betreffenden Neu-Rundsteuerempfänger 8 bzw. 9 auszuführen ist. Das Abspeichern des Abbildes erfolgt dabei entweder bereits vor der Installation der Neu-Rundsteuerempfänger 8 und 9 oder erst später nach deren Installation entweder unmittelbar oder mittels Fernprogrammierung. Im Abbild sind dabei inhaltlich unverändert nur alle jene Zeilen und in den Zeilen nur jene Einträge der Sendezentrale-Zeitprogramm-Liste SZPL vorhanden, welche für den betreffenden Neu-Rundsteuerempfänger 8 bzw. 9 relevant sind und zu demjenigen Teil der Handlungen gehören, welcher von diesen durchzuführen ist.

In den Feldern der Zeilen des Abbildes sind z. B. je eine der folgenden Informationen der zugehörigen Zeile der Sendezentrale-Zeitprogramm-Liste SZPL vorhanden:

- eine Programmnummer,
- eine Tageszeit für die Ausführung des in der Zeile enthaltenen Eintrags,
- Rundsteuer-Wochentage, an denen der Eintrag zur Ausführung gelangen soll,
- ein Befehl,
- ein zeitlicher Gültigkeitsbereich für die in den übrigen Feldern der Zeile gemachten Angaben und
- der Index der betreffenden Zeile.

Der Index ist somit nicht nur ein Teil der betreffenden Zeile der Sendezentrale-Zeitprogramm-Liste SZPL, sondern auch in den Neu-Rundsteuerempfängern 8 und 9 jeweils ein Teil der dort im Abbild enthaltenen zugehörigen Zeile. Bei einer Auslagerung von Befehlen aus der Rundsteuer-Sendezentrale 1 in die Neu-Rundsteuerempfänger 8 und 9 wird der in der Zeile vorhandene Index jeweils als Identifikationsmerkmal verwendet. Aufgrund des Abbildes führt der betreffende Neu-Rundsteuerempfänger 8 bzw. 9 die dort aufgelisteten Befehle selbständig aus. Das Abbild ist somit eine Empfänger-Zeitprogramm-Liste des betreffenden Neu-Rundsteuerempfängers 8 bzw. 9.

In der Fig. 4 ist die Herleitung einer ersten Empfänger-Zeitprogramm-Liste EZPL1, geltend z. B. für den Neu-Rundsteuerempfänger 8, und einer zweiten Empfänger-Zeitprogramm-Liste EZPL2, geltend z. B. für den Neu-Rundsteuerempfänger 9, aus der Sendezentrale-Zeitprogramm-Liste SZPL symbolisch dargestellt, unter der Annahme, dass alle Zeilen-Eintragungen der letzteren für die Neu-Rundsteuerempfänger 8 und 9 relevant sind. In der Fig. 4 gelten die Annahmen, dass die Zeilen Z1, Z3, Z4, Z8, Z11, Z12, Z13, Z15 und Z16 derjenige Teil der Sendezentrale-Zeitprogramm-Liste SZPL ist, der für den Neu-Rundsteuerempfänger 8 relevant ist, und dass die Zeilen Z4, Z6, Z9, Z10, Z15, Z16, Z18, Z21 und Z22 derjenige Teil der Sendezentrale-Zeitprogramm-Liste SZPL ist, der für den Neu-Rundsteuerempfänger 9 relevant ist. In der Fig. 4 sind die für den Neu-Rundsteuerempfänger 8 relevanten Zeilen jeweils von oben rechts nach unten links und die für den Neu-Rundsteuerempfänger 9 relevanten Zeilen von oben links nach unten rechts schräg schraffiert dargestellt. Die betreffenden Zeilen sind demnach, was in der Fig. 4 durch Pfeile angedeutet ist, in die zugehörige Empfänger-Zeitprogramm-Liste EZPL1 bzw. EZPL2 zu übernehmen, dort abzubilden und zu speichern. Das Abbild bzw. die Empfänger-Zeitprogramm-Liste EZPL1 bzw. EZPL2 ist im betreffenden Neu-Rundsteuerempfänger 8 bzw. 9 vorzugsweise in einem unverlierbaren Speicher, z. B. in einem EEPROM, abgespeichert. Wenn die Neu-Rundsteuerempfänger 8 und 9 je einen Mikrocomputer enthalten, dann ist der unverlierbare Speicher z. B. der Befehls- und Parameter-Speicher 16 und entweder ein Speicher des betreffenden Mikrocomputers oder ein zusätzlich zum Mikrocomputer vorhandener Speicher. Die erste Empfänger-Zeitprogramm-Liste EZPL1 enthält die Zeilen Z1, Z3, Z4, Z8, Z11, Z12, Z13, Z15 sowie Z16 und die zweite Empfänger-Zeitprogramm-Liste EZPL2 die Zeilen Z4, Z6, Z9, Z10, Z15, Z16, Z18, Z21 sowie Z22, die alle jeweils mindestens einen Teil einer zugehörigen Zeile der Sendezentrale-Zeitprogramm-Liste SZPL enthalten, wobei die betreffende zugehörige Zeile der Sendezentrale-Zeitprogramm-Liste SZPL jeweils zu demjenigen Teil der letzteren gehört, der im betreffenden Rundsteuerempfänger 8 bzw. 9 abgebildet ist. Der Index ist dabei jeweils ein Teil einer ihm zugehörigen Zeile derjenigen Empfänger-Zeitprogramm-Listen EZPL1 und/oder EZPL2, in denen mindestens ein Teil der der betreffenden Zeile zugehörigen Zeile der Sendezentrale-Zeitprogramm-Liste SZPL abgebildet ist.

Nur besonders dafür ausgelegte Neu-Rundsteuerempfänger 8 und 9 sind in der Lage, ausgelagerte Befehle von der Rundsteuer-Sendezentrale 1 zu übernehmen. Die ausgelagerten Befehle werden dabei vorzugsweise schon vor der Installation in die Neu-Rundsteuerempfänger 8 und 9 einprogrammiert. Ändern die Befehle aber im Laufe der Zeit, so müssen die Änderungen von der Rundsteuer-Sendezentrale 1 aus in die Neu-Rundsteuerempfänger 8 und 9 nachgeführt werden können, d. h. die Einträge in den Empfänger-Zeitprogramm-Listen EZPL1 und EZPL2 müssen mittels Rundsteuer-Telegramme von der Rundsteuer-Sendezentrale 1 aus fernprogrammierbar sein. Dieses Nachführen bzw. Fernprogrammieren hat innerhalb bisher schon installierter Rundsteuer-Anlagen in einer solchen Weise zu erfolgen, dass die bereits installierten Alt-Rundsteuerempfänger 3 bis 7 durch die betreffenden Rundsteuer-Telegramme nicht gestört werden. Dies bedeutet, dass von aussen betrachtet, die Rundsteuer-Telegramme einen gleichen Aufbau und eine gleiche Telegramm-Struktur besitzen müssen, wie die bisher in bestehenden Rundsteuer-Anlagen verwendeten Rundsteuer-Telegramme, d. h. dass sie mit einem gleichen Start-Impuls ST versehen sein müssen sowie ein gleiches Impulsraster, ein gleich langes relevantes Adressenteil und eine gleiche Telegrammlänge aufweisen müssen. Zur erwähnten Fernprogrammierung und möglicherweise auch zu anderen Zwecken wird somit ein Teil der Informations-Einheiten von der Rundsteuer-Sendezentrale 1 zu den Rundsteuerempfängern 3 bis 9 in Gestalt herkömmlicher Rundsteuer-Telegramme übertragen, wobei eine Informations-Einheit eine der Zeilen Z1 bis Z23 der Sendezentrale-Zeitprogramm-Liste SZPL entspricht.

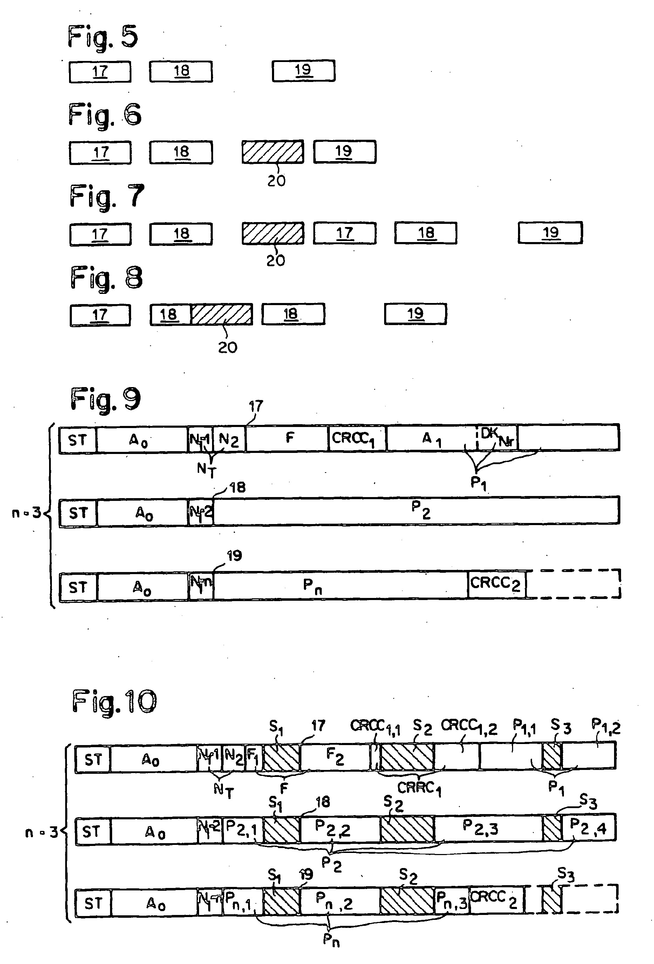

Falls ein zur Übertragung einer Informations-Einheit benötigtes Rundsteuer-Telegramm länger ist als die bisher verwendeten Rundsteuer-Telegramme, d. h. wenn es mehr Informations-Impulse benötigt, als in den bisher verwendeten Rundsteuer-Telegrammen enthalten sind, dann wird, um die Konformität mit den bisher verwendeten Rundsteuer-Telegrammen aufrecht zu erhalten, die zu übertragende Information auf mehrere Rundsteuer-Telegramme aufgeteilt und anschliessend von der Rundsteuer-Sendezentrale 1 zu den Rundsteuerempfängern 8 bis 9 in Gestalt einer Telegramm-Sequenz übertragen. Der Informationsinhalt der Telegramm-Sequenz wird nachfolgend als Informationseinheit bezeichnet, wobei diese auch noch andere Informationen beinhalten kann als nur den Informationsinhalt der erwähnten Zeilen. In der Fig. 5 ist eine erfindungsgemässe Telegramm-Sequenz 17;18;19; dargestellt, welche zeitlich in der angegebenen Reihenfolge aus drei, mit herkömmlicher Struktur versehenen Rundsteuer-Telegrammen 17, 18 und 19 besteht. Von der Rundsteuer-Sendezentrale 1 werden dann Telegramm-Sequenzen, z. B. die Telegramm-Sequenz 17;18;19, erzeugt und gesendet, zu denen je eine der Informations-Einheiten gehört. Dabei enthalten die Telegramm-Sequenzen jeweils ein oder mehrere zusammengehörige Rundsteuer-Telegramme bisheriger Struktur, z. B. die Rundsteuer-Telegramme 17 bis 19. Jedes der in der Telegramm-Sequenz 17;18;19 enthaltenen Runsteuer-Telegramme 17 bis 19 ist dabei ein solches mit herkömmlicher Länge und herkömmlicher, bisher in Rundsteuer-Anlagen verwendeter Struktur. Beim Vorhandensein mehrerer solcher Rundsteuer-Telegramme 17 bis 19 in einer Telegramm-Sequenz 17;18;19 besitzen die betreffenden Rundsteuer-Telegramme 17 bis 19 in der Regel einen beliebigen zeitlichen Abstand untereinander.

Eine schnelle Reaktionsfähigkeit ist für Rundsteuer-Systeme, die der Laststeuerung dienen, sehr wichtig. Die Telegramm-Sequenzen sind unterschiedlich lang und können bis z. B. sechs Rundsteuer-Telegramme pro Telegramm-Sequenz 17;18;19 enthalten, was eine mehrere Minuten dauernde Übertragungszeit benötigt, während der möglicherweise dringend auszuführende Rundsteuer-Schalthandlungen anstehen, wie z. B. ein Notabwurf von Lasten zur Verhinderung einer Netzüberlastung. Um dies auch bei sehr langen Telegramm-Sequenzen zu gewährleisten, können die letzteren bei Bedarf durch andere Rundsteuer-Sendungen unterbrochen werden. Die Rundsteuer-Sendezentrale 1 ist in der Lage, jede Telegramm-Sequenz 17;18;19 zusammengehöriger Rundsteuer-Telegramme 17 bis 19 innerhalb oder ausserhalb der letzteren vorübergehend zu unterbrechen und zum Unterbrechungszeitpunkt zwischen den Teilen eines unterbrochenen Rundsteuer-Telegramms oder zwischen den einzelnen Rundsteuer-Telegrammen 17 bis 19 der Telegramm-Sequenz 17;18;19 mindestens ein zusätzliches Rundsteuer-Telegramm 20, z. B. höherer Priorität, zu senden, welches nicht zur Informations-Einheit der betreffenden Telegramm-Sequenz 17;18;19 gehört. In der Fig. 6 und der Fig. 7 ist die in der Fig. 5 dargestellte und zu einer Informations-Einheit gehörende erfindungsgemässe Telegramm-Sequenz 17;18;19 dargestellt, welche nach dem Rundsteuer-Telegramm 18 von einem schraffiert dargestellten zusätzlichen Rundsteuer-Telegramm 20 unterbrochen wird, welches nicht zur betreffenden Informations-Einheit gehört. In der in der Fig. 6 dargestellten Variante wird nachfolgend auf den Unterbruch nur der fehlende Teil der Telegramm-Sequenz 17;18;19, nämlich das Rundsteuer-Telegramm 19, übertragen. In der in der Fig. 7 dargestellten Variante wird nachfolgend auf den Unterbruch die Telegramm-Sequenz 17;18;19 vollständig wiederholt. Die letztere Variante hat den Vorteil, dass weniger Speicherplätze benötigt werden, da die bereits empfangenen Rundsteuer-Telegramme 17 und 18 wieder überschrieben werden dürfen. In der Fig. 8 ist die in der Fig. 5 dargestellte und zu einer Informations-Einheit gehörende erfindungsgemässe Telegramm-Sequenz 17;18;19 dargestellt, deren Rundsteuer-Telegramm 18 von einem schraffiert dargestellten zusätzlichen Rundsteuer-Telegramm 20 unterbrochen wird, welches nicht zur befreffenden Informations-Einheit gehört, wobei das unterbrochene Rundsteuer-Telegramm 18 nach dem Rundsteuer-Telegramm 20 und vor dem Rundsteuer-Telegramm 19 noch einmal von der Rundsteuer-Sendezentrale 1 gesendet wird.

In der Fig. 9 ist eine aus n = 3 Rundsteuer-Telegrammen 17, 18 und 19 bestehende erfindungsgemässe Telegramm-Sequenz 17;18;19 dargestellt, wobei allerdings die drei Rundsteuer-Telegramme 17 bis 19 zum besseren Vergleich nicht hintereinander liegend, sondern übereinander liegend dargestellt sind.

Ein erstes Rundsteuer-Telegramm 17 der Telegramm-Sequenz 17;18;19 besteht, zeitlich vorzugsweise in der angegebenen Reihenfolge, aus

- einem Start-Impuls ST,
- einer ersten Adresse $A_o$,
- einer Telegramm-Laufnummer $N_1$,
- einer Zusatznummer $N_2$,
- einem Funktions-Codewort F,
- einem ersten Checksumme-Codewort $CRCC_1$ und
- einem ersten Teil $P_1$ binär dargestellter Parameterwerte.

Alle mittleren Rundsteuer-Telegramme der Telegramm-Sequenz 17;18;19, z. B. das Rundsteuer-Telegramm 18, bestehen, zeitlich vorzugsweise in der angegebenen Reihenfolge, jeweils aus

- einem Start-Impuls ST,
- der ersten Adresse $A_o$,
- einer Telegramm-Laufnummer $N_1$ und
- einem mittleren Teil $P_2$ der binär dargestellten Parameterwerte.

Ein letztes Rundsteuer-Telegramm 19 der Telegramm-Sequenz 17;18;19 besteht, zeitlich vorzugsweise in der angegebenen Reihenfolge, aus

- einem Start-Impuls ST,
- der ersten Adresse $A_o$,
- einer Telegramm-Laufnummer $N_1$,
- einem letzten Teil $P_n = P_3$ der binär dargestellten Parameterwerte und

- einem zweiten Checksumme-Codewort $CRCC_2$.

Jedes der zur Telegramm-Sequenz 17;18;19 gehörenden Rundsteuer-Telegramme 17, 18 und 19 beginnt mit einem Start-Impuls ST und der zeitlich nachfolgenden ersten Adresse $A_o$, die oft gleich lang ist wie die Last-Adresse A (siehe Fig. 3). Die erste Adresse $A_o$ eines jeden zur Telegramm-Sequenz 17;18;19 gehörenden Rundsteuer-Telegramms 17, 18 und 19 ist jedoch keine Last-Adresse A, sondern eine freie, in der bisherigen Rundsteuer-Anlage noch nicht als Last-Adresse verwendete Adresse, damit die bereits in der Rundsteuer-Anlage installierten Alt-Rundsteuerempfänger 3 bis 7, denen alle die erste Adresse $A_o$ unbekannt ist, nicht auf die Rundsteuer-Telegramme 17 bis 19 der Telegramm-Sequenz 17;18;19 ansprechen. Damit ist sichergestellt, dass alle schon installierten Alt-Rundsteuerempfänger 3 bis 7 durch einen Empfang der Telegramm-Sequenz 17; 18;19 nicht gestört werden. Die Kompatibilität mit dem bisher vom Betreiber verwendeten Rundsteuer-System ist somit gewährleistet.

Trotz möglichem Vorhandensein mehrerer Rundsteuer-Telegramme 17 bis 19 in einer Telegramm-Sequenz 17;18;19 wird jede zu einer Telegramm-Sequenz gehörige Informations-Einheit von den Neu-Rundsteuerempfängern 8 bis 9 als Einheit erkannt und verarbeitet. Zu diesem Zweck sind die Rundsteuer-Telegramme 17 bis 19 einer gleichen Telegramm-Sequenz 17;18; 19 vorzugsweise fortlaufend numeriert, wobei eine so erhaltene Telegramm-Laufnummer nachfolgend mit $N_1$ bezeichnet wird. Die Telegramm-Laufnummer $N_1$ wird im ersten Rundsteuer-Telegramm 17 einer jeden Telegramm-Sequenz 17;18;19 ergänzt durch eine zeitlich direkt nachfolgende Zusatznummer $N_2$. Alle zu einer gleichen Telegramm-Sequenz 17;18;19 gehörenden Rundsteuer-Telegramme 17 bis 19 enthalten somit je die mitübertragene Telegramm-Laufnummer $N_1$, wobei das erste Rundsteuer-Telegramm 17 der Telegramm-Sequenz 17;18;19 ausserdem noch die mitübertragene Zusatznummer $N_2$ enthält. Die beiden Nummern $N_1$ und $N_2$, z. B. in der angegebenen Reihenfolge nacheinander geschrieben, bilden zusammen eine zweiteilige Telegramm-Nummer $N_T = N_1;N_2$ . Die Telegramm-Nummer $N_T$ bzw. die Telegramm-Laufnummer $N_1$ ist innerhalb des Rundsteuer-Telegramms 17 bzw. 18 und 19 vorzugsweise unmittelbar hinter der dem Start-Impuls ST nachfolgenden ersten Adresse $A_o$ angeordnet (siehe Fig. 9).

Die Zusatznummer $N_2$ gibt z. B. die Anzahl n von Rundsteuer-Telegrammen 17 bis 19 an, die in der betreffenden Telegramm-Sequenz 17;18;19 enthalten sind, oder sie gibt die Anzahl von innerhalb der Telegramm-Sequenz 17;18;19 enthaltenen Informations-Bits an.

- Im letzteren Fall bezeichnet die Zusatznummer $N_2$ die Anzahl aller Informations-Bits, welche, z. B. unter Vernachlässigung aller Start-Impulse und aller er-

sten Adressen $A_o$, zeitlich nach dem ersten Checksumme-Codewort $CRCC_1$ in der Telegramm-Sequenz 17;18;19 enthalten sind, und ist dann gleich der Summe aller Bits der Teile $P_1$, $P_2$, ... und $P_n$ der Parameterwerte der Telegramm-Sequenz 17;18;19 sowie der Summe der Anzahl Bits aller Telegramm-Laufnummern $N_1$, ausser der im ersten Rundsteuer-Telegramm 17 der Telegramm-Sequenz 17;18;19 enthaltenen Telegramm-Laufnummer $N_1$. Jeder Neu-Rundsteuerempfänger 8 bzw. 9 kann anhand des empfangenen Wertes von $N_2$ ermitteln, ob das gerade empfangene Rundsteuer-Telegramm das letzte der gerade laufenden Telegramm-Sequenz 17;18;19 ist.

- Im ersteren Fall enthalten dagegen die beiden Nummern $N_1$ und $N_2$ die Information, dass das gerade empfangene Rundsteuer-Telegramm das $N_1$-te Rundsteuer-Telegramm einer aus $N_2$ Rundsteuer-Telegrammen bestehenden Telegramm-Sequenz 17;18;19 ist und weiss, dass das gerade empfangene Rundsteuer-Telegramm das letzte seiner Telegramm-Sequenz 17;18;19 ist, wenn $N_1 = N_2$.

Die beiden Nummern $N_1$ und $N_2$ sind somit so ausgebildet, dass nach dem Empfang der betreffenden Rundsteuer-Telegramme 17 bis 19, deren Zugehörigkeit zur betreffenden gleichen Telegramm-Sequenz 17;18;19 von den Neu-Rundsteuerempfängern 8 und 9 erkannt wird. Die beiden Nummern $N_1$ und $N_2$ werden nach dem Empfang des zugehörigen Rundsteuer-Telegramms von den Neu-Rundsteuerempfängern 8 und 9 ebenfalls verwendet, um zu erkennen, ob das betreffende Rundsteuer-Telegramm zu einer bestimmten Telegramm-Sequenz 17;18;19 gehört oder nicht. Die Neu-Rundsteuerempfänger 8 und 9 sind auch in der Lage, bei einem Netzspannungs-Ausfall zu erkennen, ob ein nach Wiederkehr der Netzspannung empfangenes Rundsteuer-Telegramm ein in der Reihenfolge richtig nachfolgendes Rundsteuer-Telegramm einer durch den Netzspannungs-Ausfall unterbrochenen Telegramm-Sequenz 17;18;19 ist, da das dann empfangene Rundsteuer-Telegramm eine falsche Telegramm-Laufnummer $N_1$ und/oder Zusatznummer $N_2$ besitzt. Die beiden Nummern $N_1$ und $N_2$ sowie das zweite Checksumme-Codewort $CRCC_2$ gestatten den Neu-Rundsteuerempfängern 8 und 9, sich nach einem Netzspannungs-Unterbruch, aber auch nach dem Empfang fehlerhafter Daten wieder zu orientieren.

Die eigentliche mittels der Telegramm-Sequenz 17;18;19 zu übertragende Information besteht aus zwei Teilen, nämlich aus einer Funktionsangabe, dargestellt durch das Funktions-Codewort F, und aus zur betreffenden Funktion gehörigen Parameterwerten, dargestellt durch die Teile $P_1$, $P_2$, ... und $P_n$ der Parameterwerte, mit z. B. n = 3 (siehe Fig. 9).

Viele übertragene Funktionsangaben gelten systemweit, also für alle Lasten. Ihnen ist keine Last-Adresse zugeordnet.

Andere Funktionsangaben gelten nur für bestimmte Lasten oder Last-Gruppen und beeinflussen diese. Dazu gehört z. B. die Fernprogrammierung einer Zeile in der Empfänger-Zeitprogramm-Liste EZPL1 bzw. EZPL2 der Neu-Rundsteuerempfänger 8 bis 9, welche einen Befehl enthält zur Schaltung gewisser Lasten bzw. Last-Gruppen. Diese Fernprogrammierung ist z. B. ausgedrückt durch die Funktion "Eintrag ... vornehmen". Diesen lastspezifischen Funktionsangaben ist jeweils eine Last-Adresse $A_1$ und vorzugsweise eine zeitlich nachfolgende Doppelkommando-Nummer $DK_{Nr}$ zugeordnet. Die Doppelkommando-Nummer $DK_{Nr}$ besteht z. B. aus 5 Bit und kann dann bis zu 32 Positionen der Ausführungs-Impulse darstellen.

Die konkrete Bedeutung der Funktionsangabe und der zugehörigen Parameterwerte wird später erläutert.

Das Funktions-Codewort F ist immer im ersten Rundsteuer-Telegramm 17, vorzugsweise zeitlich unmittelbar hinter dessen Telegramm-Nummer $N_1$;$N_2$, der Telegramm-Sequenz 17;18;19 angeordnet und wird selber unmittelbar gefolgt von einem ersten Checksumme-Codewort $CRCC_1$ ("Cyclic Redundancy Check Characters"). Das erste Teil $P_1$ der Parameterwerte gehört zum ersten Rundsteuer-Telegramm 17 der Telegramm-Sequenz 17;18;19 und ist dort unmittelbar hinter dem ersten Checksumme-Codewort $CRCC_1$ angeordnet. Das mittlere, zweite Teil $P_2$ der Parameterwerte gehört zum mittleren, zweiten Rundsteuer-Telegramm 18 der Telegramm-Sequenz 17;18;19 und ist dort unmittelbar hinter der Telegramm-Laufnummer $N_1$ angeordnet, da im mittleren Rundsteuer-Telegramm 18 weder ein Funktions-Codewort F noch ein erstes Checksumme-Codewort CRCC1 vorhanden ist. Das letzte, dritte Teil $P_n = P_3$ der Parameterwerte gehört zum dritten und letzten Rundsteuer-Telegramm 19 der Telegramm-Sequenz 17;18;19 und ist dort unmittelbar hinter der Telegramm-Laufnummer $N_1$ angeordnet, da im letzten Rundsteuer-Telegramm 19 ebenfalls weder ein Funktions-Codewort F noch ein erstes Checksumme-Codewort CRCC1 vorhanden ist. Im letzten Rundsteuer-Telegramm 19 der Telegramm-Sequenz 17;18;19 ist vorzugsweise unmittelbar nach dem letzten Teil $P_n = P_3$ der Parameterwerte noch ein zweites Checksumme-Codewort $CRCC_2$ vorhanden, welches das logische und physikalische Ende der Telegramm-Sequenz 17;18;19 darstellt. Das letzte Rundsteuer-Telegramm 19 der Telegramm-Sequenz 17;18;19 ist entweder mit dem zweiten Checksumme-Codewort $CRCC_2$ beendet und dann oft kürzer als die anderen Rundsteuer-Telegramme 17 und 18 oder es läuft, ohne Informationen zu übertragen, nach dem zweiten Checksumme-Codewort $CRCC_2$ so lange weiter, bis es zeitlich gleich lang ist wie die anderen Rundsteuer-Telegrammen 17 und 18. Der letztere Fall ist in der Fig. 9 gestrichelt dargestellt.

Das erste Checksumme-Codewort $CRCC_1$ dient zur Sicherung der Telegramm-Nummer $N_T = N_1$; $N_2$ und des Funktions-Codewortes F, während das zwei-

te Checksumme-Codewort $CRCC_2$ zur Sicherung der Teile $P_1$ bis $P_n = P_3$ der Parameterwerte dient. Die beiden Checksumme-Codeworte $CRCC_1$ und $CRCC_2$ werden auf an sich bekannte und daher nicht beschriebene Weise vorzugsweise mittels eines Generatorpolynoms $G_1(x) = x^3 + x^2 + 1$ bzw.

$$G_2(x) = x^7 + x^6 + x^5 + x^2 + 1$$

erzeugt.

Bei den für die Alt-Rundsteuerempfänger 5 bis 7 bestimmten Rundsteuer-Telegramme ist ein Teil der Informations-Impulse, vorzugsweise die M ersten Informations-Impulse des Rundsteuer-Telegramms, mit der Last-Adresse A belegt (siehe Fig. 3). Alle mittels einer Rundsteuer-Anlage zu schaltenden Lasten werden z. B. in Last-Gruppen unterteilt, die je durch eine Last-Adresse A gekennzeichnet sind. Die Last-Adressen A dienen dazu, ganz bestimmte Last-Gruppen, wie z. B. 4h-Boiler, 8h-Boiler, Tarifumschalt-Relais in Elektrizitätszählern, Heizungen, usw., mittels der Rundsteuerung gezielt anzusprechen. Die Last-Adressen A können so benutzt werden, um dem Rundsteuer-System die Ausführung einer grösseren Anzahl gebietsabhängiger Befehle und/oder den Rundsteuerempfängern die Ausführung einer grösseren Befehlszahl zu ermöglichen. Bei schon bestehenden Rundsteuer-Anlagen sind die Last-Adressen A in der Regel bereits festgelegt und damit fest vorgegeben. Die der Last-Adresse A im Rundsteuer-Telegramm nachfolgenden Einzelkommandos bzw. Doppelkommandos werden in den Rundsteuerempfängern 5 bis 7 immer nur in engem Zusammenhang mit der betreffenden Last-Adresse A wirksam, d. h. nur wenn die Last-Adresse korrekt ist, werden die in den nachfolgenden Informations-Impulse enthaltenen Befehle ausgeführt.

Die Zuordnung der Last-Adressen A in den bestehenden Rundsteuer-Anlagen zu den verschiedenen Lasten bzw. Last-Gruppen ist in vielen Fällen ein langwieriger und komplizierter, sich über viele Jahre erstreckender Umstellungs- und Anpassungs-Prozess, so dass die Betreiber von Rundsteuer-Anlagen beim Einbau der Neu-Rundsteuerempfänger 8 bis 9 in bestehenden Rundsteuer-Anlagen nur höchst ungern Veränderungen des bestehenden Adressierungs-Sytems in Kauf nehmen. Obwohl die Neu-Rundsteuerempfänger 8 und 9 gewisse Funktionen von der Rundsteuer-Sendezentrale 1 übernehmen und diese selbständig ausführen, ist es nicht notwendig für solche Funktionen, die von Last-Adressen $A_1$ abhängig sind, ein neues Codier-System mit einer neuen Adressierungsart einzuführen. Im Gegenteil, da im erfindungsgemässen Rundsteuerverfahren Schalthandlungen zur selbständigen Ausführung an die Rundsteuerempfänger delegiert werden, ist es besonders wichtig, dass trotz der Selbständigkeit der Rundsteuerempfänger, die Übersicht über die Schaltzustände der Last-Gruppen erhalten bleibt, wie dies schon jetzt in den bereits installierten Rundsteuer-Anlagen der Fall ist. Die schon vorhandenen Last-Adressen A (siehe Fig. 3), allerdings ohne die erste Adresse $A_o$, können daher zur Auslagerung der Funktionen in die Neu-Rundsteuerempfänger 8 und 9 mitbenutzt werden, d. h. die Rundsteuer-Telegramme der Telegramm-Sequenzen, z. B. der Telegramm-Sequenz 17;18;19, enthalten Last-Adressen $A_1$, die gleich aufgebaut und gleich strukturiert sind wie die Last-Adressen A der bestehenden Rundsteuer-Anlagen. Wenn die zu einer Telegramm-Sequenz 17;18;19 gehörende Informations-Einheit somit selber zu einer Last oder einer Last-Gruppe gehört, die eine Last-Adresse $A_1$ aufweist, dann ist die Last-Adresse $A_1$, gefolgt von der Doppelkommando-Nummer $DK_{Nr}$, vorzugsweise als zweite Adresse der Telegramm-Sequenz zu Beginn in dem ersten Parameter-Codewort $P_1$ enthalten (siehe Fig. 9). Die Last-Adressen A und $A_1$ sind dann vorzugsweise für gleiche Lasten bzw. Lastgruppen identisch, unabhängig davon, ob diese mittels einer Telegramm-Sequenz 17;18;19 indirekt oder einem bisher geltenden Rundsteuer-Telegramm direkt angesteuert werden. Die Position der Last-Adresse $A_1 = A$ zu Beginn des ersten Teils $P_1$ der Parameterwerte ist somit im ersten Rundsteuer-Telegramm 17 der Telegramm-Sequenz 17;18; 19 nur zeitlich versetzt angeordnet gegenüber der Position unmittelbar nach dem Start-Impuls ST der gleichen Last-Adressen $A = A_1$ derjenigen Rundsteuer-Telegramme, die nicht zu einer gemeinsamen Telegramm-Sequenz 17;18;19 gehören (siehe Fig. 3). Die Neu-Rundsteuerempfänger 8 und 9 reagieren dann beim Empfang eines herkömmlichen, nicht zu einer Telegramm-Sequenz gehörenden Rundsteuer-Telegramms mit einer konventionellen Schalthandlung und schalten alle Lasten mit der Last-Adresse $A = A_1$. Für die direkte Beeinflussung, d. h. für das unmittelbare Ein/Aus-Schalten der mit den Last-Adressen $A_1$ versehenen Lasten bzw. Lastgruppen mittels der Neu-Rundsteuerempfänger 8 und 9 werden für die letzteren somit die gleichen Rundsteuer-Telegramme verwendet, wie sie bis anhin für die Alt-Rundsteuerempfänger 5 bis 7 verwendet wurden. Beim Empfang einer Telegramm-Sequenz 17;18;19 führen die Neu-Rundsteuerempfänger 8 und 9 die empfangenen Funktions-Angaben aus und falls diese "Eintrag ... vornehmen" bedeuten, wird die entsprechende Zeile der Empfänger-Zeitprogramm-Liste EZPL1 bzw. EZPL2 in den Befehls- und Parameter-Speicher 16 einprogrammiert. Wenn dann zu einem späteren Zeitpunkt im Neu-Empfänger 8 bzw. 9 eine interne Uhr, z. B. eine Quarzuhr oder eine netzgeführte Uhr, eine Übereinstimmung mit einem Zeitparameterwert in einer Zeile der Empfänger-Zeitprogramm-Liste EZPL1 bzw. EZPL2 findet, dann wird entsprechend eine Last bzw. eine Last-Gruppe angesteuert, deren Adresse $A = A_1$ zur betreffenden Zeile gehört.

Wenn also in einer Rundsteuer-Anlage sowohl Alt-Rundsteuerempfänger 5 bis 7 als auch Neu-Rundsteuerempfänger 8 bis 9 vorhanden sind, dann sind für eine grössere Befehlszahl oder für gebietsabhängige Befehle die Last-Adressen A und $A_1$ beider Arten von Rundsteuerempfängern identisch. Die Verwendung gleicher Last-Adressen A und $A_1$ trägt somit zentralenseitig viel zu einer einfachen und übersichtlichen Verwaltung der zu übertragenden Informationen bei, da beide Arten von Rundsteuerempfängern für Gebiete bzw. Lastgruppen die gleichen Last-Adressen $A = A_1$ besitzen, welche ausserdem noch aus der bisherigen Betriebsführung der bestehenden Rundsteuer-Anlage übernommen werden. Werden von der Rundsteuer-Sendezentrale 1 Funktionen in die Neu-Rundsteuerempfänger 8 und 9 ausgelagert, so können somit für die verschiedenen Lastgruppen die genau gleichen Last-Adressen A verwendet werden, die bis dahin in der bereits installierten Rundsteuer-Anlage verwendet wurden. Durch Beibehaltung der bisherigen Last-Adressen A bei der Auslagerung von Funktionen in die Neu-Rundsteuerempfänger 8 und 9 wird die Erweiterung bestehender Rundsteuer-Anlagen übersichtlich und einfach. Die Verwendung von gleichen Last-Adressen A und $A_1$ in den Alt- und Neu-Rundsteuerempfängern hat unter anderem auch den Vorteil, dass der Decodierer 14 der Neu-Rundsteuerempfänger 8 und 9 ähnlich aufgebaut werden kann wie der Decodierer 13b der Alt-Rundsteuerempfänger 5 bis 7. Wenn in einer bisherigen Rundsteuer-Anlage Alt-Rundsteuerempfänger 5 bis 7 vorhanden sind, die Lasten $d_1$, $e_2$, $f_3$, $g_4$, $h_1$ und $j_5$ oder Last-Gruppen ansteuern, die mit Last-Adressen A versehen sind, ist somit die zweite Adresse $A_1$ entweder eine von den in der bisherigen Rundsteuer-Anlage bereits verwendeten Last-Adressen A oder gleich wie die letzteren strukturiert.

Wenn eine bestehende Rundsteuer-Anlage mit Neu-Rundsteuerempfängern 8 bis 9 erweitert wird, können, wie bereits erwähnt, in der erweiterten Rundsteuer-Anlage Direktschalt-Alt-Rundsteuerempfänger 3 und 4 vorhanden sein. Die Rundsteuer-Sendezentrale 1 darf in diesem Fall in den Rundsteuer-Telegrammen, die für die anderen Alt-Rundsteuerempfänger 5 bis 7 oder für die Neu-Rundsteuerempfänger 8 bis 9 bestimmt sind, an denjenigen Impulsschritt-Positionen $S_1$, $S_2$ und $S_3$ der Rundsteuer-Telegramme, wo die adressenlosen Befehle der Direktschalt-Alt-Rundsteuerempfänger 3 und 4, d. h. die sogenannten Direkt-Doppelkommandos DDK, angeordnet sind, keine oder nur Direkt-Doppelkommandos DDK senden, die den bestehenden Sollzustand bestätigen. In den zum erfindungsgemässen Rundsteuerverfahren gehörenden Rundsteuer-Telegrammen 17 bis 19 werden somit die zu den Direkt-Doppelkommandos DDK gehörenden Impulsschritte nicht genutzt, sondern bei der Belegung mit Informations-Bits übersprungen. Wenn in einer bestehenden bisherigen Rundsteuer-Anlage somit Direktschalt-Alt-Rundsteuerempfänger 3 und 4 vorhanden sind, die adressenlose Lasten a und b bzw. c mittels empfangener Direktschalt-Befehle steuern, welche in den zur bisherigen Rundsteuer-Anlage gehörenden Rundsteuer-Telegrammen in vorgegebenen Impulsschritt-Positionen $S_1$, $S_2$ und $S_3$ angeordnet sind, dann belegt die Rundsteuer-Sendezentrale 1 mit Hilfe einer Schablone bei einer Codierung der zu einer Telegramm-Sequenz 17;18;19 gehörenden Rundsteuer-Telegramme 17, 18, 19 die Impulsschritt-Positionen $S_1$, $S_2$ und $S_3$ der Direktschalt-Befehle mit keinen Informations-Bits der zur Telegramm-Sequenz 17;18;19 gehörenden Informations-Einheit. Ausserdem lassen die Neu-Rundsteuerempfänger 8 und 9 mit Hilfe einer gleichen Schablone bei einer Decodierung der empfangenen Rundsteuer-Telegramme 17 bis 19 der Telegramm-Sequenz 17;18; 19 die Werte der in den Impulsschritt-Positionen $S_1$, $S_2$ und $S_3$ der Direktschalt-Befehle enthaltenen Bits unberücksichtigt, die somit bei der Decodierung ausgeblendet werden.

In der Darstellung der Fig. 10 ist die in der Fig. 9 dargestellte Telegramm-Sequenz 17;18;19 ergänzt worden mit schraffiert dargestellten Impulsschritt-Positionen $S_1$, $S_2$ und $S_3$, in denen in Rundsteuer-Telegrammen, die für Direktschalt-Alt-Rundsteuerempfänger 3 und 4 bestimmt sind, die Direkt-Doppelkommandos angeordnet sind und die in den Neu-Rundsteuerempfängern 8 bis 9 bei der Decodierung eines der empfangenen Rundsteuer-Telegramme 17 bis 19 jeweils ausgeblendet werden. Die Impulsschritt-Positionen $S_1$, $S_2$ und $S_3$ befinden sich in allen drei Rundsteuer-Telegrammen 17, 18 und 19 in den gleichen zeitlichen Positionen. Im ersten Rundsteuer-Telegramm 17 der Telegramm-Sequenz 17; 18;19 teilen die Impulsschritt-Positionen $S_1$ das Funktions-Codewort F in zwei Teile $F_1$ und $F_2$, die Impulsschritt-Positionen $S_2$ das erste Checksumme-Codewort $CRCC_1$ in zwei Teile $CRCC_{1,1}$ und $CRCC_{1,2}$ und die Impulsschritt-Positionen $S_3$ das erste Teil $P_1$ der Parameterwerte in zwei Teile $P_{1,1}$ und $P_{1,2}$. Im zweiten Rundsteuer-Telegramm 18 der Telegramm-Sequenz 17;18;19 teilen die Impulsschritt-Positionen $S_1$, $S_2$ und $S_3$ das zweite Teil $P_2$ der Parameterwerte in vier Teile $P_{2,1}$, $P_{2,2}$, $P_{2,3}$ und $P_{2,4}$. Im letzten, dritten Rundsteuer-Telegramm 19 der Telegramm-Sequenz 17;18;19 teilen die Impulsschritt-Positionen $S_1$ und $S_2$ das dritte Teil $P_3$ der Parameterwerte in drei Teile $P_{3,1}$, $P_{3,2}$ und $P_{3,3}$, während die Impulsschritt-Positionen $S_3$ im gestrichelt dargestellten, dem zweiten Checksumme-Codewort $CRCC_2$ zeitlich nachfolgenden informationslosen Bereich des dritten Rundsteuer-Telegramms 19 liegen. Durch das Vorhandensein der Impulsschritt-Positionen $S_1$, $S_2$ und $S_3$ wird die Telegramm-Sequenz 17;18;19 länger, was möglicherweise bei einer gegebenen zu übertragenden Information mindestens ein zusätzliches, in der Fig. 10 nicht dargestelltes Rundsteuer-Telegramm in der Telegramm-Sequenz 17;18;19 erforderlich machen kann. Dieser Nachteil ist jedoch in der Regel nur vorübergehend vorhanden, da im Laufe der Zeit damit zu rechnen ist, dass die Direktschalt-Alt-Rundsteuerempfänger 3 und 4 aus den Alt-Rundsteuer-Anlagen entfernt werden.

Bei der Berechnung des Checksumme-Codewortes $CRCC_2$ und, für den Fall, dass die Zusatznummer $N_2$ die Anzahl Informations-Bits angibt, bei der Berechnung der letzteren werden die Impulsschritt-Positionen $S_1$, $S_2$ und $S_3$ vorzugsweise nicht mitgerechnet.

Die Erfahrung hat gezeigt, dass die Rundsteuer-Anwender im Laufe der Jahre die Anzahl der in den Alt-Rundsteuer-Anlagen enthaltenen Direktschalt-Alt-Rundsteuerbefehle allmählich reduzieren, um die Impulsschritte der zugehörigen Direkt-Doppelkommandos mittels einer moderneren Codierung besser nutzen zu können. Dieser Erneuerungs-Prozess einer Rundsteuer-Anlage kommt jedoch nicht voll zum Tragen, wenn die Direktschalt-Alt-Rundsteuerempfänger 3 und 4 aus der Rundsteuer-Anlage zwar eliminiert werden, die dadurch freigewordenen Impulsschritt-Positionen der Direktschalt-Befehle jedoch, da starr und unveränderlich festgelegt, nicht genutzt werden können. Um dies zu verhindern, müssen die übersprungenen bzw. ausgeblendeten Impulsschritt-Positionen $S_1$, $S_2$ und $S_3$ der Direktschalt-Befehle in der Rundsteuer-Sendezentrale 1 veränderbar und in den Neu-Rundsteuerempfängern 8 und 9 aus der Ferne veränderbar sein. D. h. unter anderem, dass die in der Schablone der Neu-Rundsteuerempfänger 8 und 9 enthaltenen Impulsschritt-Positionen $S_1$, $S_2$ und $S_3$ der Direktschalt-Befehle vorzugsweise von der Rundsteuer-Sendezentrale 1 aus fernprogrammierbar sind. Eine neue, durch Fernprogrammierung abgeänderte Schablone wird dann weniger Direkt-Doppelkommandos auszublenden haben, so dass deren so freigewordene Impulsschritt-Positionen von einer moderneren Codierung neu mitbenutzt werden können. Dadurch kann ein Rundsteuer-Code besser genutzt werden, da mehr Befehle möglich sind oder die Telegramm-Sequenz 17;18;19 gekürzt werden kann.

Die Fernprogrammierung einer Schablone ist heikel und erfordert spezielle Vorkehrungen. Vorzugsweise werden daher zur Fernprogrammierung der in den Neu-Rundsteuerempfängern 8 und 9 enthaltenen Schablone mehrmals, über eine längere Zeit hinweg, die neuen Schablonenwerte sowie ein Gültigkeitsbeginn-Zeitwert der neuen Schablonenwerte als Teil einer Informations-Einheit, also der entsprechenden Parameterwerte, zu den Neu-Rundsteuerempfängern 8 und 9 übertragen, wobei die letzteren so lange mit einer altprogrammierten Schablone weiterarbeiten, bis dass der Gültigkeitsbeginn-Zeitwert der neuen Schablonenwerte von der in den Neu-Rundsteuerempfängern 8 bis 9 enthaltenen internen Uhr erreicht wird, ab dessen Erreichen dann die neuen Schablonenwerte von den Neu-Rundsteuerempfängern 8 und 9 verwendet werden.

Im erfindungsgemässen Rundsteuerverfahren werden vorzugsweise folgende konkrete Funktions-Codeworte F mit den dazu angegebenen Parametern verwendet:

- Funktions-Codewort "Tageszeit synchronisieren" mit der Tageszeit als Parameter: Dieser Befehl gestattet systemweit alle empfängerinternen Uhren zu synchronisieren.
- Funktions-Codewort "Datum synchronisieren" mit dem Datum und den natürlichen Wochentagen als Parameter: Dieser Befehl gestattet systemweit das Datum und den natürlichen Wochentag aller empfängerinternen Uhren zu synchronisieren.
- Funktions-Codewort "Rundsteuer-Wochentage synchronisieren" mit z. B. acht Rundsteuer-Wochentagen als Parameter: Dieser Befehl gestattet es, allen Neu-Rundsteuerempfängern 8 bis 9 systemweit einen Rundsteuer-Wochentag für den laufenden Tag und die nachfolgenden z. B. sieben Tage mitzuteilen.
- Funktions-Codewort "Programm-Nummer synchronisieren" mit z. B. acht Zusatzprogramm-Nummern als Parameter: Dieser Befehl gestattet es, allen Neu-Rundsteuerempfängern 8 bis 9 systemweit ein Zusatzprogramm für den laufenden Tag und die nachfolgenden z. B. sieben Tage mitzuteilen.
- Funktions-Codewort "Spezial-Parameter synchronisieren" mit z. B. variablen Verzögerungszeiten oder mit einer Angabe "Sperrung der Empfänger-Zeitprogramm-Liste-Ausführung" oder mit Flags als Parameter: Dieser Befehl gestattet es, allen Neu-Rundsteuerempfängern 8 bis 9 systemweit allfällig geänderte Spezial-Parameter mitzuteilen.
- Funktions-Codewort "Schablone installieren" mit einem Datum, zu welchem die Schablonen-Umstellung zu erfolgen hat, und mit Informationen über die innerhalb des Rundsteuer-Telegramms verbotenen Impulsschritt-Positionen als Parameter: Dieser Befehl gestattet eine systemweite Fernprogrammierung der Schablone in allen Neu-Rundsteuerempfängern 8 bis 9, wobei die Schablone jeweils definiert, welche Impulsschritt-Positionen im Rundsteuer-Telegramm 17, 18 oder 19 nicht benutzt werden dürfen.
- Funktions-Codewort "Eintrag ... löschen" mit dem Index einer zu löschenden Zeile oder mit zwei Indexen, nämlich demjenigen einer ersten und demjenigen einer letzten Zeile eines zu löschenden Bereichs der Empfänger-Zeitprogramm-Liste EZPL1 bzw. EZPL2, als Parameter: Dieser Befehl gestattet es, systemweit einen oder mehrere Einträge aus der Empfänger-Zeitprogramm-Liste EZPL1 bzw. EZPL2 aller Neu-Rundsteuerempfänger 8 bis 9 zu entfernen.
- Funktions-Codewort "Eintrag ... vornehmen" mit einer Programm-Nummer, einer Tageszeit, den Rundsteuer-Wochentagen (MDMDFSS12), einem Befehl bestehend aus Last-Adresse $A_1$, DK/EK- Nummer und Ein/Aus-Bit, einer Gültigkeitsbereich-Einschränkung und dem Index als Parameter. Diese Funktion gestattet es, einen Eintrag in die Empfänger-Zeitprogramm-Liste EZPL1 bzw. EZPL2 aller durch die Last-Adresse $A_1$ und DK/EK-Nummer angesprochenen Neu-Rundsteuerempfänger 8 bis 9 vorzunehmen.

Ein Neu-Rundsteuerempfänger 8 bzw. 9 zur Ausführung des erfindungsgemässen Rundsteuerverfahrens enthält jeweils einen Decodierer 14, der so ausgebildet ist, dass anhand der decodierten ersten Adresse $A_o$ eines empfangenen Rundsteuer-Telegramms 17, 18 oder 19 im Neu-Rundsteuerempfänger 8 bzw. 9 erkennbar ist, dass das empfangene Rundsteuer-Telegramm 17, 18 oder 19 Teil einer Telegramm-Sequenz 17;18;19 zusammengehöriger Rundsteuer-Telegramme 17 bis 19 ist.

Der Decodierer 14 ist auch so ausgebildet, dass anhand der decodierten Telegramm-Laufnummer $N_1$ und der decodierten Zusatznummer $N_2$ im Neu-Rundsteuerempfänger 8 bzw. 9 erkennbar ist, ob in beliebigen Zeitabständen empfangene Rundsteuer-Telegramme 17 bis 19 Teil einer gleichen, einer einzigen Informations-Einheit zugehörigen Telegramm-Sequenz 17;18;19 zusammengehöriger Rundsteuer-Telegramme 17 bis 19 sind.

Der Decodierer 14 ist ebenfalls so ausgebildet, dass anhand der decodierten zweiten Adresse $A_1$ eines, zu Beginn die erste Adresse $A_o$ aufweisenden Rundsteuer-Telegramms 17, 18 oder 19 im Neu-Rundsteuerempfänger 8 bzw. 9 erkennbar ist, welche Last bei einer Ausführung einer Empfänger-Zeitprogramm-Liste EZPL1 bzw. EZPL2 betroffen ist.

Der zur Decodierung der Last-Adresse $A_1$ dienende Teil des Decodierers 14 ist ausserdem gleichstrukturiert ausgebildet wie der Decodierer 13b zur Decodierung der Last-Adressen A ausgebildet ist, die zu den Lasten $d_1$, $e_2$, $f_3$, $g_4$, $h_1$ und $j_5$ oder zu Lastgruppen gehören, die von den Alt-Rundsteuerempfängern 5 bis 7 angesteuert sind.

Der Decodierer 14 ist auch so ausgebildet, dass Informationsinhalte der mittels einer Schablone ausgeblendeten Impulsschritt-Positionen $S_1$, $S_2$ und $S_3$ der Direktschalt-Befehle bei der Decodierung bedeutungslos sind.

Wenn die in der Schablone enthaltenen Werte der Impulsschritt-Positionen $S_1$, $S_2$ und $S_3$ von Direktschalt-Befehlen mittels einer von der Rundsteuer-Sendezentrale 1 gesendeten Telegramm-Sequenz 17;18;19 fernparametrierbar sind, dann sind empfangene neue Schablonenwerte und ein empfangener Gültigkeitsbeginn-Zeitwert der neuen Schablonenwerte, welche Werte alle als Teil einer Informations-Einheit in der gesendeten Telegramm-Sequenz 17;18;19 enthalten sind, im Rundsteuerempfänger 8 bzw. 9 in je einem Speicher abgespeichert. Im Neu-Rundsteuerempfänger 8 bzw. 9 sind ausserdem jeweils die interne Uhr sowie eine Anordnung vorhanden zur Umschaltung von alten auf neue Schablonenwerte, sobald der abgespeicherte Zeitwert durch die von der internen Uhr angezeigten Zeit erreicht ist.

## Patentansprüche

1. Rundsteuerverfahren, in welchem eine Menge von Handlungen, die von Rundsteuerempfängern (8. 9) auszuführen sind, in einer Rundsteuer-Sendezentrale (1) in einer Liste von zeitlich festgelegten Befehlen (SZPL) formuliert und abgespeichert sind, **dadurch gekennzeichnet, dass** in den Rundsteuerempfängern (8, 9) je eine Kopie (EZPL1, EZPL2) desjenigen Teils der Einträge der Liste von zeitlich festgelegten Befehlen abgespeichert wird, der demjenigen Teil der Handlungen entspricht, der vom betreffenden Rundsteuerempfänger (8 bzw. 9) durchzuführen ist.

2. Rundsteuerverfahren nach Anspruch 1, **dadurch gekennzeichnet, dass** die Liste von zeitlich festgelegten Befehlen eine Sendezentrale-Zeitprogramm-Liste(SZPL) ist, deren Zeilen (Z1 bis Z23) je eine Informations-Einheit enthalten, und dass das Abbild eine Empfänger-Zeitprogramm-Liste (EZPL1 bzw. EZPL2) ist, deren Zeilen (Z1, Z3, Z4, Z8, Z11, Z12, Z13, Z15 und Z16 bzw. Z4, Z6, Z9, Z10, Z15, Z16, Z18, Z21 und Z22) jeweils mindestens einen Teil einer zugehörigen Zeile der Sendezentrale-Zeitprogramm-Liste (SZPL) enthalten, wobei die betreffende zugehörige Zeile der Sendezentrale-Zeitprogramm-Liste (SZPL) jeweils zu demjenigen Teil der letzteren gehört, der im betreffenden Rundsteuerempfänger (8 bzw. 9) abgebildet ist.

3. Rundsteuerverfahren nach Anspruch 2, **dadurch gekennzeichnet, dass** jede der Zeilen (Z1 bis Z23) der Sende-Zeitprogramm-Liste (SZPL) mit einem zugehörigen, von der Rundsteuer-Sendezentrale (1) vergebenen Index versehen ist, der jeweils ein Teil der betreffenden Zeile der Sende-Zeitprogramm-Liste (SZPL) und der zugehörigen Zeile derjenigen Empfänger-Zeitprogramm-Listen (EZPL1, EZPL2) ist, in denen mindestens ein Teil der betreffenden Zeile der Sende-Zeitprogramm-Liste (SZPL) abgebildet ist.

4. Rundsteuerverfahren nach einem der Ansprüche 1 bis 3, **dadurch gekennzeichnet, dass** von der Rundsteuer-Sendezentrale (1) Telegramm-Sequenzen (17; 18; 19) erzeugt und gesendet werden, zu denen je eine der Informations-Einheiten gehört, und dass die Telegramm-Sequenzen (17;18;19) jeweils ein oder mehrere zusammengehörige Rundsteuer-Telegramme (17 bis 19) bisheriger Struktur enthalten.

5. Rundsteuerverfahren nach Anspruch 4, **dadurch gekennzeichnet, dass** alle zu einer gleichen Telegramm-Sequenz (17:18:19) gehörenden Rundsteuer-Telegramme (17 bis 19) je eine mitübertragene Telegramm-Laufnummer ($N_1$) und das erste Rundsteuer-Telegramm (17) der Telegramm-Sequenz (17;18;19) eine mitübertragene Zusatznummer ($N_2$) enthalten, die beide so ausgebildet sind, dass nach dem Empfang der betreffenden Rundsteuer-Telegramme (17 bis 19), deren Zugehörigkeit zur betreffenden gleichen Telegramm-Sequenz (17;18;19) von den Rundsteuerempfängern (8, 9) erkannt wird.

6. Rundsteuerverfahren gemäss Anspruch 5, **dadurch gekennzeichnet, dass** die Rundsteuer-Sendezentrale (1) in der Lage ist, die Telegramm-Sequenz (17;18;19) zusammengehöriger Rundsteuer-Telegramme (17, 18, 19) innerhalb oder ausserhalb der letzteren vorübergehend zu unterbrechen und zum Unterbrechungszeitpunkt ein zusätzliches Rundsteuer-Telegramm (20) zu senden, welches nicht zur Informations-Einheit der betreffenden Telegramm-Sequenz (17;18;19) gehört, und dass die betreffenden Rundsteuerempfänger (8, 9) in der Lage sind, zu erkennen, dass das zusätzliche Rundsteuer-Telegramm (20) nicht zur unterbrochenen Telegramm-Sequenz (17;18;19) gehört, da das zusätzliche Rundsteuer-Telegramm (20) keine zur Telegramm-Sequenz (17;18;19) gehörende Telegramm-Laufnummer ($N_1$) und/oder Zusatznummer ($N_2$) besitzt.

7. Rundsteuerverfahren nach Anspruch 5 oder 6, **dadurch gekennzeichnet, dass** die Zusatznummer ($N_2$) eine Anzahl von innerhalb der Telegramm-Sequenz (17;18;19) enthaltenen Informations-Bits angibt.

8. Rundsteuerverfahren nach Anspruch 5 oder 6, **dadurch gekennzeichnet, dass** die Zusatznummer ($N_2$) die Anzahl der in der Telegramm-Sequenz (17;18;19) enthaltenen Rundsteuer-Telegramme (17 bis 19) angibt.

9. Rundsteuerverfahren nach einem der Ansprüche 1 bis 8, **dadurch gekennzeichnet, dass** ein erstes Rundsteuer-Telegramm (17) der Telegramm-Sequenz (17;18;19) aus einem Start-Impuls (ST), einer ersten Adresse ($A_o$), einer Telegramm-Laufnummer ($N_1$), einer Zusatznummer ($N_2$), einem Funktions-Codewort (F), einem ersten Checksumme-Codewort ($CRCC_1$) und einem ersten Teil ($P_1$) der Parameterwerte besteht, dass alle mittleren Rundsteuer-Telegramme (18) der Telegramm-Sequenz (17;18;19) jeweils aus einem Start-Impuls (ST), der ersten Adresse ($A_o$), einer Telegramm-Laufnummer ($N_1$) und einem mittleren Teil ($P_2$) der Parameterwerte bestehen, sowie dass ein letztes. Rundsteuer-Telegramm (19) der Telegramm-Sequenz (17:18:19) aus einem Start-Impuls (ST), der ersten Adresse ($A_o$), einer Telegramm-Laufnummer ($N_1$), einem letzten Teil ($P_n = P_3$) der Parameterwerte und einem zweiten Checksumme-Codewort ($CRCC_2$) besteht.

10. Rundsteuerverfahren nach Anspruch 9, **dadurch gekennzeichnet, dass** in einer bisherigen Rundsteuer-Anlage Alt-Rundsteuerempfänger (5 bis 7) vorhanden sind, die Lasten ($d_1$, $e_2$, $f_3$, $g_4$, $h_1$, $j_5$) oder Last-Gruppen ansteuern, die mit Last-Adressen versehen sind, und dass die erste Adresse ($A_o$) eine freie, in der bisherigen Rundsteuer-Anlage noch nicht als Last-Adresse verwendete Adresse ist.

11. Rundsteuerverfahren nach Anspruch 9 oder 10, **dadurch gekennzeichnet, dass** die zu der Telegramm-Sequenz (17;18;19) gehörende Informations-Einheit selber zu einer Last oder einer Last-Gruppe gehört, die eine Last-Adresse ($A_1$) aufweist, und dass die letztere als zweite Adresse zu Beginn im ersten Teil ($P_1$) der Parameterwerte angeordnet ist sowie von einer Doppelkommando-Nummer ($DK_{Nr}$) gefolgt ist.

12. Rundsteuerverfahren nach Anspruch 11, **dadurch gekennzeichnet, dass** in einer bisherigen Rundsteuer-Anlage Alt-Rundsteuerempfänger (5 bis 7) vorhanden sind, die Lasten ($d_1$, $e_2$, $f_3$, $G_4$, $h_1$, $j_5$) oder Last-Gruppen ansteuern, die mit Last-Adressen (A) versehen sind, und dass die zweite Adresse entweder eine von den in der bisherigen Rundsteuer-Anlage bereits verwendeten Last-Adressen (A) ist oder gleich wie die letzteren strukturiert ist.

13. Rundsteuerverfahren nach einem der Ansprüche 1 bis 12, **dadurch gekennzeichnet, dass** in einer bisherigen Rundsteuer-Anlage Alt-Rundsteuerempfänger (3, 4) vorhanden sind, die adressenlose Lasten (a, b, c) oder adressenlose Last-Gruppen mittels empfangener Direktschalt-Befehle steuern, welche in zur bisherigen Rundsteuer-Anlage gehörenden Rundsteuer-Telegrammen in vorgegebenen Impulsschritt-Positionen ($S_1$, $S_2$, $S_3$) angeordnet sind, dass die Rundsteuer-Sendezentrale (1) mit Hilfe einer Schablone bei einer Codierung der zu einer Telegramm-Sequenz (17;18;19) gehörenden Rundsteuer-Telegramme (17, 18, 19) die Impulsschritt-Positionen ($S_1$, $S_2$, $S_3$) der Direktschalt-Befehle mit keinen Bits der zur Telegramm-Seqenz (17;18;19) gehörenden Informations-Einheit belegt und dass die Rundsteuerempfänger (8, 9) mit Hilfe einer gleichen Schablone bei einer Decodierung der empfangenen Rundsteuer-Telegramme (17 bis 19) der Telegramm-Sequenzen (17:18:19) die Werte der in den Impulsschritt-Positionen ($S_1$, $S_2$, $S_3$) der Direktschalt-Befehle enthaltenen Bits unberücksichtigt lassen.

14. Rundsteuerverfahren nach Anspruch 13, **dadurch gekennzeichnet, dass** die in der Schablone der Rundsteuerempfänger (8, 9) enthaltenen Impulsschritt-Positionen ($S_1$, $S_2$, $S_3$) der Direktschalt-Befehle von der Rundsteuer-Sendezentrale (1) aus fernprogrammierbar sind.

15. Rundsteuerverfahren nach Anspruch 14, **dadurch gekennzeichnet, dass** zur Fernprogrammierung der in den Rundsteuerempfängern (8, 9) enthaltenen Schablone mehrmals, über eine längere Zeit hinweg, neue Schablonenwerte sowie ein Gültigkeitsbeginn-Zeitwert der neuen Schablonenwerte als Teil einer Informations-Einheit zu den Rundsteuerempfängern (8, 9) übertragen werden, und dass die letzteren so lange mit einer altprogrammierten Schablone weiterarbeiten, bis dass der Gültigkeitsbeginn-Zeitwert der neuen Schablonenwerte erreicht wird, ab dessen Erreichen dann die neuen Schablonenwerte von den Rundsteuerempfängern (8, 9) verwendet werden.

16. Rundsteuerempfänger (8 bzw. 9) zur Ausführung des Rundsteuerverfahrens nach einem der Ansprüche 1 bis 15, **dadurch gekennzeichnet, dass** der Rundsteuerempfänger (8 bzw. 9) einen Speicher (16) mit einer Kopie eines Teils der Einträge einer in einer Rundsteuer-Sendezentrale (1) gespeicherten Liste von zeitlich festgelegten Befehlen enthält, der demjenigen Teil von Handlungen entspricht, der vom Rundsteuerempfänger (8 bzw. 9) durchzuführen ist, wobei der Rundsteuerempfänger (8 bzw. 9) einen Decodierer (14) enthält, der so ausgebildet ist, dass anhand einer decodierten ersten Adresse ($A_0$) eines empfangenen Rundsteuer-Telegramms (17,18 oder 19) im Rundsteuerempfänger (8 bzw. 9) erkennbar ist, dass das empfangene Rundsteuer-Telegramm (17, 18 oder 19) Teil einer Telegramm-Sequenz (17;18;19) zusammengehöriger Rundsteuer-Telegramme (17 bis 19) ist.

17. Rundsteuerempfänger (8 bzw. 9) nach Anspruch 16, **dadurch gekennzeichnet, dass** der Decodierer (14) so ausgebildet ist, dass anhand einer decoderten Telegramm-Laufnummer ($N_1$) und einer decodierten Zusatznummer ($N_2$) im Rundsteuerempfänger (8 bzw. 9) erkennbar ist, ob in beliebigen Zeitabständen empfangene Rundsteuer-Telegramme (17 bis 19) Teil einer gleichen, einer einzigen Informations-Einheit zugehörigen Telegramm-Sequenz (17;18;19) zusammengehöriger Rundsteuer-Telegramme (17 bis 19) sind.

18. Rundsteuerempfänger (8 bzw. 9) nach Anspruch 16 oder 17, **dadurch gekennzeichnet, dass** der Decodierer (14) so ausgebildet ist, dass anhand einer decodierten zweiten Adresse ($A_1$) eines, zu Beginn eine erste Adresse ($A_o$) aufweisenden Rundsteuer-Telegramms (17, 18 oder 19) im Rundsteuerempfänger (8 bzw. 9) erkennbar ist, welche Last bei einer Ausführung einer Empfänger-Zeitprogramm-Liste (EZPL1, EZPL2) betroffen ist.

19. Rundsteuerempfänger (8 bzw. 9) nach Anspruch 18, **dadurch gekennzeichnet, dass** ein zur Decodierung der zweiten Adresse ($A_1$) dienender Teil des Decodierers (14) gleichstrukturiert ausgebildet ist wie ein Decodierer (13b) zur Decodierung von Last-Adressen (A) ausgebildet ist, die zu Lasten ($d_1$, $e_2$, $f_3$, $g_4$, $h_1$ und $j_5$) oder Lastgruppen gehören, die von Alt-Rundsteuerempfängern (5 bis 7) angesteuert sind.

20. Rundsteuerempfänger (8 bzw 9) nach einem der Ansprüche 16 bis 19, **dadurch gekennzeichnet, dass** der Decodierer (14) so ausgebildet ist, dass Informationsinhalte von mittels einer Schablone ausgeblendeten Impulsschritt-Positionen ($S_1$, $S_2$ und $S_3$) von Direktschalt-Befehlen bei der Decodierung bedeutungslos sind.

21. Rundsteuerempfänger (8 bzw. 9) nach Anspruch 20, **dadurch gekennzeichnet, dass** in der Schablone enthaltene Werte der Impulsschritt-Positionen ($S_1$, $S_2$, $S_3$) von Direktschalt-Befehlen mittels einer von der Rundsteuer-Sendezentrale (1) gesendeten Telegramm-Sequenz (17;18;19) fernparametrierbar sind, dass empfangene neue Schablonenwerte und ein empfangener Gühigkeitsbeginn-Zeitwert der neuen Schablonenwerte, welche Werte alle als Teil einer Informations-Einheit in der gesendeten Telegramm-Sequenz (17;18;19) enthalten sind, im Rundsteuerempfänger (8 bzw 9) in je einem Speicher abgespeichert sind, und dass im Rundsteuerempfänger (8 bzw. 9) eine interne Uhr sowie eine Anordnung vorhanden sind zur Umschaltung von alten auf die neuen Schablonenwerte, sobald der abgespeicherte Zeitwert durch die von der internen Uhr angezeigten Zeit erreicht ist.

## Claims

1. A ripple control process in which a quantity of actions which are to be performed by ripple control receivers (8, 9) are formulated in a ripple control central transmission station (1) in a list of commands (SZPL) that are fixed in respect of time, and stored, **characterised in that** stored in each of the ripple control receivers (8, 9) is a respective copy (EZPL1, EZPLZ) of that part of the entries of the list of commands fixed in respect of time, which corresponds to that part of the actions which is to be executed by the ripple control receiver (8 or 9 respectively) in question.

2. A ripple control process according to claim 1 **characterised in that** the list of commands which are fixed in respect of time is a central transmission station time program list (SZPL) whose lines (Z1 to Z23) each contain a respective information unit, and that the image is a receiver time program list (EZPL1 or EZPL2 respectively) whose lines (Z1, Z3, Z4, Z8, Z11, Z12, Z13, Z15 and Z16 or Z4, Z6, Z9, Z10, Z15, Z16, Z18, Z21 and Z22 respectively) each respectively contain at least a part of an associated line of the central transmission station time program list (SZPL), wherein the respective associated line of the central transmission station time program list (SZPL) respectively belongs to that part of the latter, whose image is formed in the ripple control receiver (8 or 9 respectively) in question.

3. A ripple control process according to claim 2 **characterised in that** each of the lines (Z1 to Z23) of the central transmission station time program list (SZPL) is provided with an associated index which is allocated by the ripple control central transmission station (1) and which is a respective part of the line in question of the central transmission station time program list (SZPL) and the associated line of those receiver time program lists (EZPL1, EZPL2) in which is formed the image of at least a part of the line in question of the central transmission station time program list (SZPL).

4. A ripple control process according to one of claims 1 to 3 **characterised in that** the ripple control central transmission station (1) produces and transmits telegram sequences (17; 18; 19), to each of which belongs a respective one of the information units, and that the telegram sequences (17; 18; 19) each include one or more interrelated ripple control telegrams (17 to 19) of previous structure.

5. A ripple control process according to claim 4 **characterised in that** all ripple control telegrams (17 to 19) belonging to the same telegram sequence (17; 18; 19) each include a respective co-transmitted telegram serial number ($N_1$) and the first ripple control telegram (17) of the telegram sequence (17; 18; 19) contains a co-transmitted additional number ($N_2$), both of which are such that after reception of the ripple control telegrams (17 to 19) in question, their relatedness to the same telegram sequence (17; 18; 19) in question is recognised by the ripple control receivers (8, 9).

6. A ripple control process according to claim 5 **characterised in that** the ripple control central transmission station (1) is capable of temporarily interrupting the telegram sequence (17; 18; 19) of interrelated ripple control telegrams (17, 18, 19) within or outside the latter and sending at the time of interruption an additional ripple control telegram (20) which does not belong to the information unit of the telegram sequence (17; 18; 19) in question, and that the ripple control receivers (8, 9) in question are capable of recognising that the additional ripple control telegram (20) does not belong to the interrupted telegram sequence (17; 18; 19) as the additional ripple control telegram (20) does not have a telegram serial number ($N_1$) and/or additional number ($N_2$), belonging to the telegram sequence (17; 18; 19).

7. A ripple control process according to claim 5 or claim 6 **characterised in that** the additional number ($N_2$) specifies a number of information bits contained within the telegram sequence (17; 18; 19).

8. A ripple control process according to claim 5 or claim 6 **characterised in that** the additional number ($N_2$) specifies the number of ripple control telegrams (17 to 19) contained in the telegram sequence (17; 18; 19).

9. A ripple control process according to one of claims 1 to 8 **characterised in that** a first ripple control telegram (17) of the telegram sequence (17; 18; 19) comprises a start pulse (ST), a first address ($A_0$), a telegram serial number ($N_1$), an additional number ($N_2$), a function code word (F), a first check sum code word ($CRCC_1$) and a first part ($P_1$) of the parameter values, that all central ripple control telegrams (18) of the telegram sequence (17; 18; 19) respectively comprise a start pulse (ST), the first address ($A_0$), a telegram serial number ($N_1$) and a central part ($P_2$) of the parameter values, and that a last ripple control telegram (19) of the telegram sequence (17; 18; 19) comprises a start pulse (ST), the first address ($A_0$), a telegram serial number ($N_1$), a last part ($P_n = P_3$) of the parameter values and a second check sum code word ($CRCC_2$).

10. A ripple control process according to claim 9 **characterised in that** present in a previous ripple control installation are old ripple control receivers (5 to 7) which operate loads ($d_1$, $e_2$, $f_3$, $g_4$, $h_1$, $j_5$) or load groups which are provided with load addresses, and that the first address ($A_0$) is a free address which is not yet used as a load address in the previous ripple control installation.

11. A ripple control process according to claim 9 or claim 10 **characterised in that** the information unit belonging to the telegram sequence (17; 18; 19) itself belongs to a load or a load group which has a load address ($A_1$) and that the latter is arranged as a second address at the beginning in the first part ($P_1$) of the parameter values and is followed by a double command number ($DK_{Nr}$).

12. A ripple control process according to claim 11 **characterised in that** present in a previous ripple control installation are old ripple control receivers (5 to 7) which operate loads ($d_1$, $e_2$, $f_3$, $g_4$, $h_1$, $j_5$) or load groups which are provided with load addresses (A) and that the second address is either one of the load addresses (A) already used in the previous ripple control installation or is structured the same as the latter load addresses.

13. A ripple control process according to one of claims 1 to 12 **characterised in that** present in a previous ripple control installation are old ripple control receivers (3, 4) which control address-less loads (a, b, c) or address-less load groups by means of received direct switching commands which are arranged in predetermined pulse step positions ($s_1$, $s_2$, $s_3$) in ripple control telegrams belonging to the previous ripple control installation, that by means of a template, in an operation for encoding of the ripple control telegrams (17, 18, 19) belonging to a telegram sequence (17; 18; 19), the ripple control central transmission station (1) fills the pulse step positions ($s_1$, $s_2$, $s_3$) of the direct switching commands with no bits of the information unit belonging to the telegram sequence (17; 18; 19) and that, by means of the same template, in an operation for decoding of the received ripple control telegrams (17 to 19) of the telegram sequences (17; 18; 19), the ripple control receivers (8, 9) leave disregarded the values of the bits contained in the pulse step positions ($s_1$, $s_2$, $s_3$) of the direct switching commands.

14. A ripple control process according to claim 13 **characterised in that** the pulse step positions ($s_1$, $s_2$, $s_3$), which are contained in the template of the ripple control receivers (8, 9), are remotely programmable from the ripple control central transmission station (1).

15. A ripple control process according to claim 14 **characterised in that** for remote programming of the template contained in the ripple control receivers (8, 9), a plurality of times, over a prolonged period, new template values and a validity commencement time value of the new template values, as part of an information unit, are transmitted to the ripple control receivers (8, 9), and that the latter continue to operate with an old-programmed template until the validity commencement time value of the new template values is reached, from the attainment of which the new template values are then used by the ripple control receivers (8, 9).

16. A ripple control receiver (8 or 9 respectively) for performing the ripple control process according to one of claims 1 to 15 **characterised in that** the ripple control receiver (8 or 9 respectively) includes a memory (16) with a copy of a part of the entries of a list, stored in a ripple control central transmission station (1), of commands which are fixed in respect of time, which part corresponds to that part of actions which is to be performed by the ripple control receiver (8 or 9 respectively), wherein the ripple control receiver (8 or 9 respectively) includes a decoder (14) which is such that by means of a decoded first address ($A_0$) of a received ripple control telegram (17, 18 or 19) it is possible to ascertain in the ripple control receiver (8 or 9 respectively) that the received ripple control telegram (17, 18 or 19) is part of a telegram sequence (17; 18; 19) of interrelated ripple control telegrams (17 to 19).

17. A ripple control receiver (8 or 9 respectively) according to claim 16 **characterised in that** the decoder (14) is such that, by means of a decoded telegram serial number ($N_1$) and a decoded additional number ($N_2$), it is possible to ascertain in the ripple control receiver (8 or 9 respectively) whether ripple control telegrams (17 to 19) received at any time intervals are part of an identical telegram sequence (17; 18; 19) of interrelated ripple control telegrams (17 to 19), that is associated with a single information unit.

18. A ripple control receiver (8 or 9 respectively) according to claim 16 or claim 17 **characterised in that** the decoder (14) is such that, by means of a decoded second address ($A_1$) of a ripple control telegram (17, 18 or 19) having at the beginning a first address ($A_0$), it is possible to ascertain in the ripple control receiver (8 or 9 respectively) which load is involved in a performance of a receiver time program list (EZPL1, EZPL2).

19. A ripple control receiver (8 or 9 respectively) according to claim 18 **characterised in that** a part of the decoder (14), which serves for decoding of the second address ($A_1$), is structured in the same way as a decoder (13b) is designed for decoding load addresses (A) which belong to loads ($d_1$, $e_2$, $f_3$, $g_4$, $h_1$ and $j_5$) or load groups which are operated by old ripple control receivers (5 to 7).

20. A ripple control receiver (8 or 9 respectively) according to one of claims 16 to 19 **characterised in that** the decoder (14) is such that information contents of pulse step positions ($s_1$, $s_2$ and $s_3$) of direct switching commands, which are cut out by means of a template, are meaningless in the decoding operation.

21. A ripple control receiver (8 or 9 respectively) according to claim 20 **characterised in that** values contained in the template in respect of the pulse step positions ($s_1$, $s_2$, $s_3$) of direct switching commands can be remotely parametered by means of a telegram sequence (17; 18; 19) transmitted by the ripple control central transmission station (1), that received new template values and a received validity commencement time value of the new template values, which values are all contained as part of an information unit in the transmitted telegram sequence (17; 18; 19) are stored in the ripple control receiver (8 or 9 respectively) in a respective memory, and that provided in the ripple control receiver (8 or 9 respectively) are an internal clock and an arrangement for switching over from old to the new template values as soon as the stored time value is reached by the time displayed by the internal clock.

**Revendications**

1. Procédé de télécommande centralisée, dans lequel une quantité de manipulations, qui doivent être exécutées par un récepteur de télécommande centralisée (8,9), sont formulées et mémorisées dans un central d'émission de télécommande centralisée (1) sous la forme d'une liste d'instructions fixées (SZPL), **caractérisé en ce que** dans les récepteurs de télécommande centralisée (8,9) est mémorisée respectivement une copie (EZPL1, EZPL2) de la partie des entrées de la liste d'instructions fixées dans le temps, qui correspond à la partie des manipulations, qui doit être exécutée par le récepteur considéré de télécommande centralisée (8 ou 9).

2. Procédé de télécommande centralisée selon la revendication 1, **caractérisé en ce que** la liste d'instructions fixées dans le temps est une liste (SZPR) de programmes temporels du central d'émission, dont les lignes (Z1 à Z23) contiennent respectivement une unité d'information et que l'image d'une ligne (EZPL1 ou EZPL2) de programme temporel du récepteur, dont les lignes (Z1,Z3, Z4,Z8,Z11,Z12,Z13,Z15 et Z16 ou Z4,Z6,Z9,Z10,Z15,Z16,Z18, Z21 et Z22) contiennent respectivement au moins une partie de la ligne associée de la liste (SZPL) de programmes temporels du central d'émission, la ligne associée considérée de la liste (SZPL) de commande temporelle du central d'émission faisant partie respectivement de la partie de la dernière ligne, dont l'image est formée dans le récepteur considéré de télécommande centralisée (8 ou 9).

3. Procédé de télécommande centralisée selon la revendication 2, **caractérisé en ce que** chacune des lignes (Z1 à Z23) de la liste (SZPL) de programme temporel d'émission est pourvue d'un indice associé, qui est délivré par le central d'émission de télécommande centralisée (1) et qui est respectivement une partie de la ligne considérée de la liste (SZPL) de programmes temporels d'émission et de la ligne associée des listes (EZPL1, EZPL2) de programmes temporels du récepteur, dans lesquelles est formée l'image d'une partie de la ligne considérée de la liste (SZPL) de programmes temporels d'émission.

4. Procédé de télécommande centralisée selon l'une des revendications 1 à 3, **caractérisé en ce que** le central d'émission de télécommande centralisée (1) produit et émet des séquences de télégrammes (17; 18;19), dont fait partie respectivement l'une des unités d'information et que les séquences de télégrammes (17;18;19) contiennent respectivement un ou plusieurs télégrammes de télécommande centralisée associés (17 à 19) ayant une structure existante jusqu'alors.

5. Procédé de télécommande centralisée selon la revendication 4, **caractérisé en ce que** tous les télégrammes de télécommande centralisée (17 à 19), qui font partie d'une même séquence de télégrammes (17;18;19), contiennent respectivement un numéro courant de télégramme ($N_1$) transmis conjointement et que le premier télégramme de télécommande centralisée (17) de la séquence de télégrammes (17;18;19) contient un numéro supplémentaire ($N_2$) transmis conjointement, ces deux numéros étant conçus de telle sorte qu'après la réception des télégrammes considérés de télécommande centralisée (17 à 19), leur appartenance à la même séquence considérée de télégrammes (17; 18;19) est identifiée par les récepteurs de télécommande centralisée (8,9).

6. Procédé de télécommande centralisée selon la revendication 5, **caractérisé en ce que** le central d'émission de télécommande centralisée (1) est à même d'interrompre transitoirement la séquence (17;18;19) de télégrammes associés de télécommande centralisée (17;18;19) à l'intérieur ou à l'extérieur de ces derniers et d'émettre, à l'instant d'interruption, un télégramme supplémentaire de télécommande centralisée (20), qui ne fait pas partie de l'unité d'information de la séquence considérée de télégrammes (17;18;19), et que les récepteurs de télécommande centralisée considérés (8,9) sont à même d'identifier le fait que le télégramme supplémentaire de télécommande centralisée (20) ne fait pas partie de la séquence interrompue de télégrammes (17;18;19), étant donné que le télégramme supplémentaire de télécommande (20) ne contient aucun numéro courant de télégramme ($N_1$) ni aucun numéro supplémentaire ($N_2$) faisant partie de la séquence de télégrammes (17;18;19).

7. Procédé de télécommande centralisée selon la revendication 5 ou 6, **caractérisé en ce que** le numéro supplémentaire ($N_2$) indique un nombre de bits d'information contenus à l'intérieur de la séquence de télégrammes (17;18;19).

8. Procédé de télécommande centralisée selon la revendication 5 ou 6, **caractérisé en ce que** le numéro supplémentaire ($N_2$) indique le nombre des télégrammes de télécommande centralisée (17 à 19) contenu dans la séquence de télégrammes (17;18; 19).

9. Procédé de télécommande centralisée selon l'une des revendications 1 à 8, **caractérisé en ce qu'**un premier télégramme de commande centralisée (17) de la séquence de télégrammes (17;18;19) est constitué par une impulsion de démarrage (ST), une première adresse ($A_0$), un numéro courant de télégramme ($N_1$), un numéro supplémentaire ($N_2$), un mot de code de fonction (F), un premier mot de code de total de contrôle ($CRCC_1$) et une première partie ($P_1$) des valeurs de paramètres, que tous les télégrammes médians de télécommande centralisée (18) de la séquence de télégrammes (17;18; 19) sont constitués respectivement par une impulsion de démarrage (ST), par la première adresse ($A_0$), par un numéro courant de télégramme ($N_1$) et par une partie médiane ($P_2$) des valeurs de paramètres, et qu'un dernier télégramme de télécommande centralisée (19) de la séquence de télégramme (17;18;19) est constitué par une impulsion de démarrage (ST), la première adresse ($A_0$), un numéro courant de télégramme ($N_1$), une dernière partie ($P_n = P_3$) des valeurs de paramètres et un second mot de code de total de contrôle ($CRCC_2$).

10. Procédé de télécommande centralisée selon la revendication 9, **caractérisé en ce que** dans une installation de télécommande centralisée connue jusqu'alors sont prévus des anciens récepteurs de télécommande centralisée (5 à 7), qui commandent des charges ($d_1$, $e_2$, $f_3$, $g_4$, $h_1$, $j_5$) ou des groupes de charges, qui sont pourvus d'adresses de charge, et que la première adresse ($A_0$) est une adresse libre, non encore utilisée comme adresse de charge dans l'installation de télécommande centralisée existante jusqu'alors.

11. Procédé de télécommande centralisée selon la revendication 9 ou 10, **caractérisé en ce que** l'unité d'information, qui fait partie de la séquence de télégrammes (17;18;19), fait partie elle-même d'une charge ou d'un groupe de charges, qui possède une adresse de charge ($A_1$), et que cette dernière est disposée en tant que seconde adresse au début de la première partie ($P_1$) des valeurs de paramètres et est suivie par un numéro de commande double ($DK_{Nr}$).

12. Procédé de télécommande centralisée selon la revendication 11, **caractérisé en ce que** dans une installation de télécommande centralisée existante jusqu'alors sont présents des anciens récepteurs de télécommande centralisée (5 à 7), qui commandent des charges ($e_1$, $e_2$, $f_3$, $g_4$, $h_1$, $j_5$) ou des groupes de charges, qui sont pourvus d'adresses de charge (A), et que la seconde adresse est l'une des adresses de charge (A) déjà utilisée dans l'installation de télécommande centralisée existante jusqu'alors ou est structurée de la même manière que cette adresse.

13. Procédé de télécommande centralisée selon l'une des revendications 1 à 12, **caractérisé en ce que** dans une installation de télécommande centralisée existante jusqu'alors sont présents des anciens récepteurs de télécommande centralisée (3,4), qui commandent des charges (a,b,c) sans adresses ou des groupes de charges sans adresses, au moyen d'instructions reçues d'interconnexion directe, qui sont disposés dans des télégrammes de télécommande centralisés, qui font partie de l'installation de télécommande centralisée existante jusqu'alors, dans des positions prédéterminées de pas d'impulsions ($S_1$,$S_2$,$S_3$), que le central d'émission de télécommande centralisée (1) occupe, à l'aide d'un gabarit, dans le cas d'un codage des télégrammes de télécommande centralisée (17,18,19) faisant partie d'une séquence de télégrammes (17; 18; 19), les positions de pas d'impulsions ($S_1$,$S_2$,$S_3$) des instructions d'interconnexion directe ne comportant aucun bit de l'unité d'information faisant partie de la séquence de télégrammes (17;18;19), et qu'à l'aide d'un même gabarit, lors d'un décodage des télégrammes reçus de télécommande centralisée (17 à 19) des séquences de télégrammes (17;18;19), les récepteurs de télécommande centralisée (8,9) ne prennent pas en compte les valeurs des bits contenus dans les positions de pas d'impulsions ($S_1$, $S_2$, $S_3$) des instructions d'interconnexion directe.

14. Procédé de télécommande centralisée selon la revendication 13, **caractérisé en ce que** les positions de pas d'impulsions ($S_1$,$S_2$,$S_3$), qui sont contenues dans le gabarit des récepteurs de télécommande centralisée (8,9), des instructions de connexion directe peuvent être programmées à distance à partir du central d'émission de télécommande centralisée (1).

15. Procédé de télécommande centralisée selon la revendication 14, **caractérisé en ce que** pour la programmation à distance des gabarits contenus dans

16. Procédé de télécommande centralisée (8 ou 9) pour la mise en oeuvre du procédé de télécommande centralisée selon l'une des revendications 1 à 15, **caractérisé en ce que** le récepteur de télécommande centralisée (8 ou 9) contient une mémoire (16) comportant une copie d'une partie des entrées d'une liste, mémorisée dans un central -d'émission de télécommande centralisée (1), d'instructions fixées dans le temps, une partie de liste qui correspond à la partie de manipulations qui doivent être exécutées par le récepteur de télécommande centralisée (8 ou 9), et que le récepteur de télécommande centralisée (8 ou 9) contient un décodeur (14) qui est agencé de telle sorte que, sur la base d'une première adresse décodée ($A_0$) d'un télégramme reçu de télécommande centralisée (17, 18 ou 19), il est possible d'identifier dans le récepteur de télécommande centralisée (8 ou 9) le fait que le télégramme reçu de télécommande centralisée (17, 18 ou 19) fait partie d'une séquence (17;18;19) de télégrammes associés de télécommande centralisée (17 à 19). les récepteurs de télécommande centralisée (8,9), de nouvelles valeurs de gabarit ainsi qu'une valeur de temps de début de validité des nouvelles valeurs de gabarit sont transmises plusieurs fois, pendant un intervalle de temps assez long, en tant que partie d'une unité d'information aux récepteurs de télécommande centralisée (8,9), et que ces derniers traitent les valeurs avec un gabarit anciennement programmé jusqu'à ce que l'instant de début de validité des nouvelles valeurs de gabarit soit atteint, instant à partir duquel les nouvelles valeurs de gabarit sont alors utilisées par les récepteurs de télécommande centralisée (8,9).

17. Procédé de télécommande centralisée (8 ou 9) selon la revendication 16, **caractérisé en ce que** le décodeur (14) est agencé de telle sorte que sur la base d'un numéro courant décodé de télégramme ($N_2$) et d'un numéro supplémentaire décodé ($N_2$) dans le récepteur de télécommande centralisée (8 ou 9) on peut identifier si des télégrammes de télécommande centralisée (17 à 19) reçus à des intervalles de temps quelconques font partie d'une même séquence (17;18;19), associée à une seule unité d'information, de télégramme associés de télécommande centralisée (17 à 19).

18. Procédé de télécommande centralisée (8 ou 9) selon la revendication 16 ou 17, **caractérisé en ce que** le décodeur (14) est agencé de telle sorte que sur la base d'une seconde adresse décodée ($A_1$) de télégramme de télécommande centralisée (17;18 ou 19) possédant au début une première adresse ($A_0$), dans le récepteur de télécommande centralisée (8 ou 9), on peut identifier quelle charge est concernée lors d'une exécution (EZPL1, EZPL2) de programmes temporels du récepteur.

19. Récepteur de télécommande centralisée (8 ou 9) selon la revendication 18, **caractérisé en ce qu'**une partie du décodeur (14), qui est utilisée pour le décodage de la seconde adresse ($A_1$), est agencée en étant structurée de la même manière qu'un décodeur (13b) servant à décoder des adresses de charge (A), qui font partie de charges ($d_1,e_2,f_3,g_4$, $h_1$ et $j_5$) ou de groupes de charges, qui sont commandés par d'anciens récepteurs de télécommande centralisée (5 à 7).

20. Récepteur de télécommande centralisée (8 ou 9) selon l'une des revendications 16 à 19, **caractérisé en ce que** le décodeur (14) est agencé de telle sorte que des contenus d'informations de positions de pas d'impulsions ($S_1$, $S_2$ et $S_3$), occultés au moyen d'un gabarit, d'instructions d'interconnexion directe sont sans signification lors du décodage.

21. Récepteur de télécommande centralisée (8 ou 9) selon la revendication 20, **caractérisé en ce que** des valeurs, contenues dans le gabarit, des positions de pas d'impulsions ($S_1,S_2,S_3$) d'instructions d'interconnexion directe peuvent être paramétrées à distance au moyen d'une séquence de télégrammes (17;18;19) émise par le central d'émission de télécommande centralisée (1), que de nouvelles valeurs reçues de gabarits et un nouvel instant reçu de début de validité des nouvelles valeurs de gabarit, ces valeurs et cet instant faisant toutes partie d'une unité d'information dans la séquence émise de télégrammes (17;18;19), sont mémorisées dans des mémoires respectives dans le récepteur de télécommande centralisée (8 ou 9), et que dans le récepteur de télécommande centralisée (8 ou 9), sont présents une horloge interne ainsi qu'un dispositif pour réaliser la commutation d'anciennes valeurs de gabarit sur les nouvelles valeurs de gabarit, dès que l'instant mémorisé est atteint par l'heure indiquée par l'horloge interne.

# Fig. 1

# Fig. 2

| ST | EK / DK |
|----|---------|

# Fig. 3

| ST | A | EK / DK |
|----|---|---------|

# Fig. 4

SZPL

EZPL 1

EZPL 2

Fig. 5

| 17 | | 18 | | 19 |

Fig. 6

| 17 | | 18 | | //// | | 19 |
20

Fig. 7

| 17 | | 18 | | //// | | 17 | | 18 | | 19 |
20

Fig. 8

| 17 | | 18 //// | | 18 | | 19 |
20

Fig. 9

17

| ST | $A_0$ | $N_1$ | $N_2$ | F | $CRCC_1$ | $A_1$ | DK $N_r$ | |

$N_T$

$P_1$

18

| ST | $A_0$ | $N_1$ 2 | $P_2$ |

$N_T$

19

| ST | $A_0$ | $N_1$ n | $P_n$ | $CRCC_2$ | |

$n = 3$

Fig. 10

$S_1$   17   $CRCC_{1,1}$   $S_2$   $CRCC_{1,2}$   $P_{1,1}$   $S_3$   $P_{1,2}$

| ST | $A_0$ | $N_1$ | $N_2$ | $F_1$ | //// | $F_2$ | //// | | $P_{1,1}$ | //// | |

$N_T$    F    $CRRC_1$    $P_1$

$S_1$   18   $S_2$   $S_3$

| ST | $A_0$ | $N_1$ 2 | $P_{2,1}$ | //// | $P_{2,2}$ | //// | $P_{2,3}$ | //// | $P_{2,4}$ |

F    $P_2$

$S_1$   19   $S_2$   $S_3$

| ST | $A_0$ | $N_1$ | $P_{n,1}$ | //// | $P_{n,2}$ | //// | $P_{n,3}$ | $CRCC_2$ | //// | |

$P_n$

$n = 3$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8802583 A

- EP 0153856 A

**In der Beschreibung aufgeführte Nicht-Patentliteratur**

- **LANDIS ; GYR.** *Mitteilungen,* 1975, vol. 22 (4), 16-20

- **W. WEBER.** *Rundsteuersysteme,* 1975, 149-155